# EUROPEAN PATENT SPECIFICATION

(11) **EP 1 498 809 B1**
(45) Date of publication and mention of the grant of the patent: **18.06.2008**
(21) Application number: 02758854.0
(22) Date of filing: 20.08.2002
(51) Int. Cl.: G06F 3/06, G06F 12/08, G06F 13/10, G06F 12/00

(54) **STORAGE SYSTEM AND DATA TRANSFER METHOD FOR THE SYSTEM**
SPEICHERSYSTEM UND DATENTRANSFERVERFAHREN FÜR DAS SYSTEM
SYSTEME MEMOIRE ET PROCEDE ET TRANSFERT DE DONNEES POUR UN TEL SYSTEME

(30) Priority: 06.03.2002 WO PCT/JP02/02063
(43) Date of publication of application: 19.01.2005
(73) Proprietor: FUJITSU LIMITED, Kawasaki-shi, Kanagawa 211-8588 (JP)
(72) Inventor: OE, Kazuichi, c/o FUJITSU LIMITED, Kawasaki-shi, Kanagawa 211-8588 (JP); WATANABE, Takashi, c/o FUJITSU LIMITED, Kawasaki-shi, Kanagawa 211-8588 (JP)
(74) Representative: Stebbing, Timothy Charles
(86) International application number: PCT/JP2002/008359
(87) International publication number: WO 2003/075147

(56) References cited:
- JP-A- 5 308 366
- JP-A- 2002 063 060
- US-A- 5 463 772
- US-B1- 6 219 693

## Description

### Technical Field

The present invention relates to a storage system and a data transfer method for use in the system, and more particularly, to a technique for accessing an external input/output device of a disk drive or the like, by way of a node device such as a personal computer (PC) or a workstation (WS) or the like.

### Background

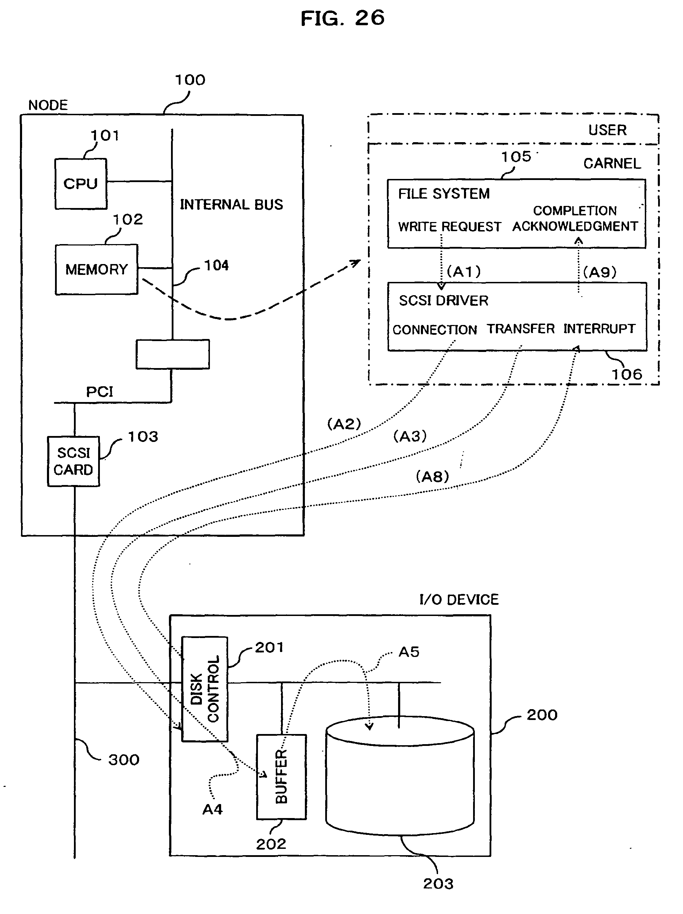

Fig. 26 shows an example of an existing storage system. As shown in Fig. 26, this system includes a node device 100 (hereinafter simply called a "node 100") such as a PC and an input/output (I/O) device 200 connected to the node 100 by way of an SCSI (Small Computer System Interface) bus 300. The node 100 is equipped with a CPU 101, a main storage section (main memory) 102, an SCSI card 103, or the like, which are connected so as to be communicable with each other by way of an internal bus 104. The I/O device 200 is equipped with a disk controller 201, a buffer 202, and a disk drive 203.

There is a case where the SCSI bus 300 is connected with a plurality of I/O devices 200. There is also a case where another interface, such as a fiber channel (FC), is used for connection between the node 100 (the main memory 102) and the I/O device 200.

In such a system, when data are transferred between the node 100 (the main memory 102) and the I/O device 200 (the disk drive 203), the node 100 must activate the disk controller 201 of the I/O device 200 by means of an SCSI protocol. For instance, when a file system 105 writes data into the disk drive 203, procedures such as those provided below are executed.

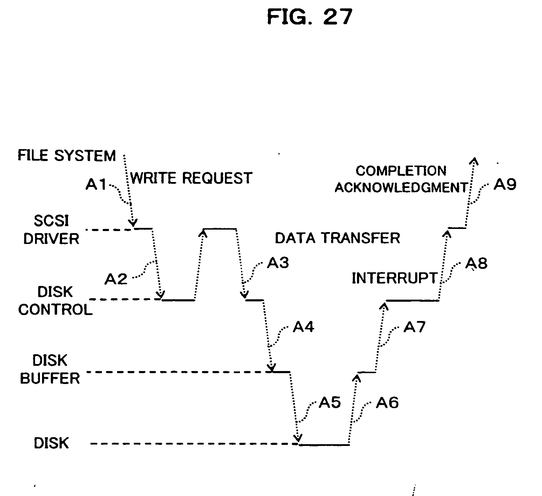

Specifically, as shown in Figs. 26 and 27, the file system 105 of the node 100 requests an SCSI driver 106 to perform writing of a disk (step A1). The file system 105 and the SCSI driver 106 are usually incorporated as a single function of an OS (operating system) or the like. The CPU 101 operates by reading file system data and driver data, which are stored in the main memory 102, thereby implementing the respective functions.

The SCSI driver 106, having received the disk write request, conducts negotiation with the disk controller 201 several times so as to determine a data transfer rate, or the like, in the SCSI bus 300, to thus establish a connection (step A2) ; initiates real transfer of data; and requests the disk controller 201 to write the data (step A3). When writing of the data into the disk drive 203 within the I/O device 200 involves excessive consumption of time, the SCSI driver 106 temporarily terminates the connection to the disk controller 201.

In the I/O device 200, after having temporarily stored into the buffer 202 the data received from the node 100 by way of the SCSI bus 300 (step A4), the disk controller 201 writes the data into the disk drive 203 (step A5). When internal processing (writing of the data) of the I/O device 200 has been completed (steps A6, A7), the disk controller 201 reports to the SCSI driver 106 that transfer (writing) has been completed, by making an interrupt (step A8), and the SCSI driver 106 reports completion of transfer operation to the file system 105 (step A9).

However, such a conventional system must start the disk controller 201 of the I/O device 200 by use of a protocol output from the node 100, such as an SCSI or an FC. Moreover, operations which would have been required until data are actually transferred are also complicated (because negotiation must be performed several times between the node 100 and the disk controller 200). Hence, there is a problem of large latency.

In relation to the band of transfer (a transfer rate) between the node 100 and the I/O device 200, improvements have been made on FC as well as on SCSI (up to 160 MB/s). However, if an Infiniband (IB) is introduced as an internal network, the transfer rate of the internal bus 104 of the node 100 can be increased up to the level of gigabytes per second (GB/s) or thereabouts. However, existing interface standards, such as SCSI and FC, have large latency as mentioned previously, and hence performance of the Infiniband cannot be exhibited sufficiently.

The present invention has been conceived in view of these problems and aims at providing a storage system and a data transfer method for use in the system, which can diminish latency by making an attempt to distribute a data transfer operation and ensure a data transfer band (rate) enabling sufficient exhibition of performance of an IB network when the IB network is introduced.

### Disclosure of the Invention

To achieve the object, a storage system of the present invention is characterized by comprising: a storage device storing data; a cache device capable of caching the data stored in the storage device; a controller controlling access to at least the storage device and the cache device; and an internal network interconnecting the storage device, the cache device, and the controller so as to enable communications therebetween, wherein the controller includes transfer instruction issuing means which issues a data transfer instruction to one of the cache device and the storage device upon receipt of an access request transmitted, by way of the internal network, from a client device connected to the internal network in an accessible manner; and at least one of the storage device and cache device which receives the data transfer instruction includes direct transfer means for performing direct transfer of data to the client device by means of directly carrying out negotiation required for data transfer with the client device in accordance with the data transfer instruction from the controller.

In the storage system having such a configuration, the client device issues an access request to the controller by way of the internal network (an access request issuing step). Upon receipt of the access request, the controller issues a data transfer instruction to the cache device or the storage device (a transfer command issuing step).

In accordance with a data transfer instruction output from the controller, the cache device or the storage device conducts a negotiation required to transfer data to the client device, thereby directly transferring data to the client device (a direct transfer step). This enables an attempt to diminish latency of the storage system and increase a data throughput significantly.

Here, the controller generates a message required to conduct negotiation between the client device and the cache device or the storage device and transmits the thus-generated message to the cache device along with the data transfer instruction. The cache device or the storage device can carry out transfer of data to the client device using the message generated by the controller. This enables the controller to intensively manage generation of a message and issue of the data transfer instruction, thereby simplifying data transfer control.

As a matter of course, the controller may transmit, to the cache device or the storage device, message information required to generate a message to be used in conducting negotiation between the client device and the cache or storage device along with the data transfer instruction. The cache device or the storage device may generate the message in accordance with the message information. This reduces the processing load on the controller associated with transfer of the data.

After completion of data transfer, the cache device or the storage device issues an acknowledgement message to the controller by way of the internal network. Upon receipt of the acknowledgement message from the cache device or the storage device, the controller may issue, to the client device, a reply message indicating completion of data transfer by way of the internal network. Thus, on the supposition that the controller generates an acknowledgment message to be issued to the client device, the processing load on respective devices can be lessened as compared with a case where the controller, the cache device, or the storage device intensively generates and issues all the messages required to conduct negotiation with the client device.

In a case where two or more cache devices are provided, the controller generates a message required for negotiation to be carried out between the client device and the respective cache devices and transmits the message to the respective cache devices along with the data transfer instruction. After the respective cache devices have transferred data to the client device through use of the message generated by the controller, any of the cache devices may transmit a message indicating completion of the data transfer to the client device by way of the internal network. This obviates a necessity of all the cache devices transmitting the reply message to the client device, which in turn significantly curtails the number of messages exchanged by way of the internal network.

As a matter of course, each of the cache devices may transmit the reply message indicating completion of data transfer to the client device by way of the internal network, and the client device may receive the respective reply messages output from the respective cache devices, thereby completing data transfer.

In a case where two or more cache devices are provided, the controller generates a message required for the negotiation to be carried out between the client device and the cache devices and transmits the message to the cache devices along with the data transfer instruction, as well as transmitting data copy destination cache device information to the cache devices. The cache devices transfer data to the client device through use of the message received from the controller. Subsequently, the cache device having received the data through data transfer may copy the received data to another cache device specified by the data copy destination cache device information received from the controller.

This enables realization of so-called mirorring in the system, thereby enhancing the reliability of the system.

The controller may instruct any one of the cache devices caching the same data to transfer the data to the storage device. The cache device having received the instruction may transfer the data to the storage device by way of the internal network and delete the data which have been stored redundantly along with the other cache device, thereby releasing a memory area thereof. This enables effective utilization of memory capacity of the cache device, and hence the memory capacity required by the cache device can be curtailed.

A storage system of the present invention is characterized by comprising a plurality of storage devices for storing data; a controller controlling access to the storage devices; and an internal network interconnecting the storage devices and the controller so as to enable communications therebetween. The controller and the storage devices further comprise the means provided below.

### • Controller

(1) Virtual storage management means which manages memory areas of a plurality of the storage devices as a virtual storage area of specific size by means of collectively managing the memory areas of a plurality of the storage devices through use of a virtual storage address; and
(2) Transfer instruction issuing means which issues a data transfer instruction to one of the storage devices having the memory area specified by the virtual storage management means on the basis of a certain virtual storage address upon receipt, by way of the internal network, of a request for access to the virtual storage area using the virtual storage address from a client device accessibly connected to the internal network.

### • Storage Device

(1) Direct transfer means which carries out a direct negotiation required for data transfer with the client device in accordance with the data transfer instruction from the controller, thereby directly transferring data to the client device.

Therefore, according to the storage system, data can be directly transferred between the storage device and the client device 7 without passing through the controller 2. Even in this case, in addition to enabling an attempt to greatly curtail latency and significantly improve a data throughput (ensure a band at which the performance of the internal network can be exhibited sufficiently), the storage system can provide a function comparable to that of the conventional virtual storage system.

### Brief Description of the Drawings

Fig. 1 is a block diagram showing the configuration of a storage system which is an embodiment of the present invention;
Fig. 2 is a functional block diagram showing the configuration of the principal section of a controller shown in Fig. 1;
Fig. 3 is a block diagram showing the configuration of the principal section of a cache device shown in Fig. 1;
Fig. 4 is a block diagram showing the configuration of the principal section of a storage device shown in Fig. 1;
Fig. 5 is a view for describing operation of the storage system shown in Fig. 1 (when data to be transferred are present in the cache device);
Fig. 6 is a view for describing operation of the storage system shown in Fig. 1 (when data to be transferred are present in the storage device);
Fig. 7 is a view for describing a first modification of operation of the storage system shown in Fig. 1;
Fig. 8 is a view for describing a second modification of operation of the storage system shown in Fig. 1;
Fig. 9 is aview for describing a third modification of operation of the storage system shown in Fig. 1;
Fig. 10 is a view for describing a fourth modification of operation of the storage system shown in Fig. 1;
Figs. 11 and 12 are views for describing a fifth modification of operation of the storage system shown in Fig. 1;
Fig. 13 is a view for describing a sixth modification of operation of the storage system shown in Fig. 1;
Fig. 14 is a view for describing a seventh modification of operation of the storage system shown in Fig. 1;
Fig. 15 is a view showing a specific example of a management table (a virtual storage/real storage conversion map) showing a correlation between a virtual storage region and a real storage region according to an eighth modification of the present embodiment;
Fig. 16 is a view showing a specific example of a management table (a cache map) showing a correlation between a virtual storage region and a cache region according to the eighth modification of the present embodiment;
Fig. 17 is a view for describing an example case where the data held in real sectors of a disk drive in the storage system according to the eighth modification of the present embodiment are transferred directly to a client;
Fig. 18 is a view for describing an example case where the data held in real sectors of the cache device in the storage system according to the eighth modification of the present embodiment are transferred directly to a client;
Fig. 19 is a view for describing a case where a "mirorring" is realized in the storage system according to the eighth modification of the present embodiment;
Fig. 20 is a view for describing a case where "striping" is realized in the storage system according to the eighth modification of the present embodiment;
Fig. 21 is a view for describing virtual storage management employed in a case where storage devices are added to the storage system according to the eighth modification of the present embodiment;
Fig. 22 is a view for describing virtual storage management when storage devices are added to the storage system that realizes the "mirorring" shown in Fig. 19;
Fig. 23 is a view for describing virtual storage management when storage devices are added to the storage system that realizes the "striping" shown in Fig. 20;
Fig. 24 is a view for describing operation when data are transferred directly to the storage device from the cache device in the storage system according to the eighth modification of the present embodiment;
Fig. 25 is a view for describing operation when data are transferred directly to the cache device from the storage device in the storage system according to the eighth modification of the present embodiment;
Fig. 26 is a view showing an example existing storage system; and
Fig. 27 is a sequence diagram for describing data transfer processing to be performed by the storage system shown in Fig. 26.

### Best Modes for Implementing the Invention

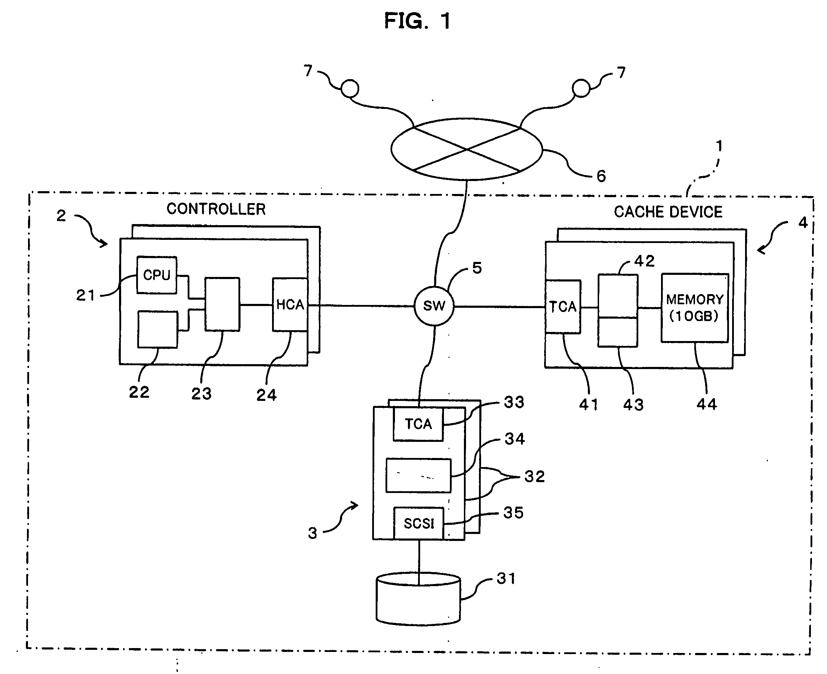

Fig. 1 is a block diagram showing the configuration of a storage system which is an embodiment of the present invention. A storage system 1 shown in Fig. 1 includes a controller (Control Machine) 2, a storage device 3, and a cache device 4. These devices 2, 3, and 4 are interconnected so as to be communicable with each other by way of an Infiniband (IB) network (IB switch) 5 serving as an internal network (such a configuration is called a WSS (Wire Speed Storage) architecture.

The devices 2, 3, and 4 are provided in respective numbers, as required. The controller 2 and the cache device 4 are constituted in the form of, e.g., network cards for use with the IB network 5. Moreover, the IB switch 5 is connected to an LAN (Local Area Network) 6 or the like constituted of one or more client devices (nodes) 7. The client devices 7 (hereinafter described simply as "clients 7") can access the storage system 1 by way of the LAN 6.

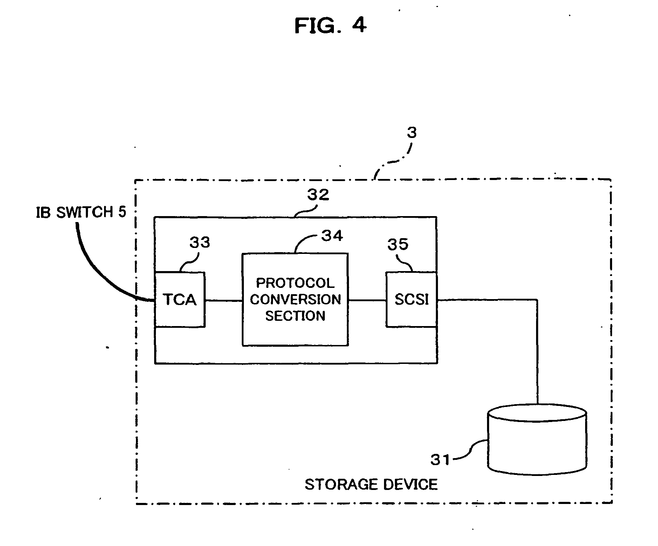

As shown in Figs. 1 and 4, the storage device 3 includes a disk drive (or possibly a tape unit) 31 for storing necessary data, e.g. , file data; and an interface card (network card) 32forcontrolling access to the disk drive 31. This interface card 32 is further equipped with a target channel adapter (TCA: Target Channel Adapter) 33 having the function of the IB network controller; a protocol conversion section (Protocol Transition Unit) 34; and a SCSI interface 35 having the function of a disk controller. The interface card 32 is prepared in required numbers equal to the number of disk drives 31 provided.

The protocol conversion section 34 can transfer necessary data directly to the client 7 by way of the IB network 5 by means of interpreting a message transmitted from the controller 2 over the IB network 5; making an access to the disk drive 31 to be accessed, by way of the SCSI interface 35 to which the disk drive 31 is connected, in accordance with details of the message; and making an RDMA (Remote Direct Memory Access) to the client 7 and returning the result of access as a reply message to the same.

Specifically, the protocol conversion section 34 serves as direct transfer means which transfers data directly to and from the client 7 by means of carrying out negotiation required for data transfer directly with the client 7 in accordance with a transfer instruction from the controller 2.

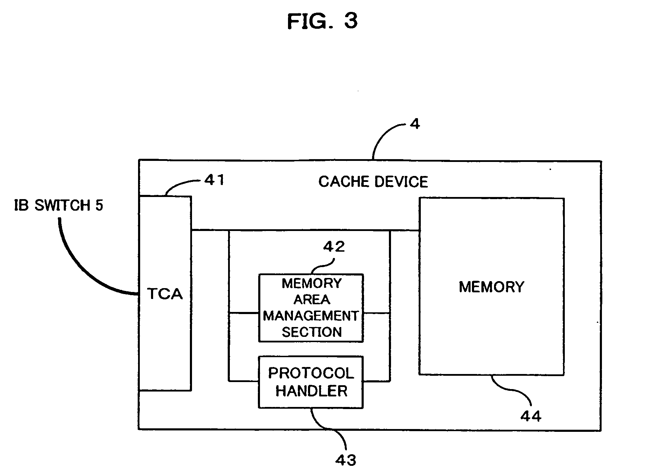

Also, the cache device 4 can transfer data directly to the client 7 in accordance with the instruction output from the controller 2. In the embodiment, as shown in Figs. 1 and 3, the cache device is constituted of a target channel adapter (TCA) 41 having the function of, e.g., an internal network controller; a memory area management section 42; a protocol handler 43; and a memory device 44 (hereinafter described simply as "memory 44") such as large-capacity RAM (of, e.g., 10 gigabytes or thereabouts).

Here, the memory area management section 42 is for managing allocation of areas (memory areas) of the memory 44 in the cache device 4 to the respective controllers 2 serving as cache regions capable of caching data pertaining to the respective disk drives 31. The protocol handler (protocol processing section) 43 interprets the message sent from the controller 2, accesses the memory 44 in accordance with details of the message, and makes the RDMA to the client 7 and returns a reply message to the client 7, thereby transferring the necessary data directly to the client 7.

In the cache device 4, the protocol handler 43 serves as direct transfer means which transfers data directly to the client 7 by means of carrying out negotiation required for data transfer directly to and from the client 7 in accordance with the transfer instruction output from the controller 2.

The controller 2 is for intensively managing (controlling) accesses to the cache device 4 and the storage device 3. For instance, the controller is realized by installing system management processes (programs), as software or firmware, into a workstation comprising, e.g., a CPU (Central Processing Unit) 21, memory 22, a chipset 23, a host channel adapter (HCA) 24, and the like.

The "system management processes" are for managing a location where data are reserved, such as where the entity of file data is reserved in the system 1 (the storage device 3 or the cache device 4), and also for receiving a request from the client device (hereinafter simply called "client") 7.

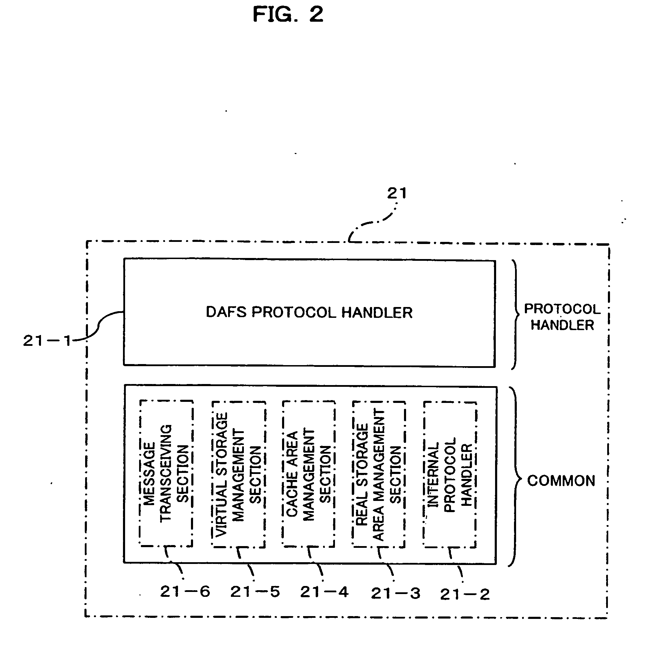

Specifically, as a result of the CPU 21 reading, e.g., the "system management processes" stored in the memory 22, the controller 2 is designed to exhibit the functions of a DAFS protocol handler (Direct Access File System Protocol Handler) 21-1, an internal protocol handler 21-2, a real storage area management section (Real Storage Manager) 21-3, a cache area management section (Cache Machine Memory Manager) 21-4, a virtual storage management section (Virtual Storage Manager) 21-5, and a message transceiving section (Message Transition Unit) 21-6, or the like, as shown in, e.g., Fig. 2.

The DAFS protocol handler 21-1 performs DAFS protocol processing and has the function of receiving a DAFS processing request sent from the client 7 and issuing a transfer instruction (data transfer instruction) to the cache device 4 or the storage device 3, which manages data of interest.

Specifically, the DAFS protocol handler 21-1 has the function of transfer instruction issuing means which issues a transfer instruction to the cache device 4 or the storage device 3 upon receipt of the access request sent from the client 7 accessible to the IB network 5 by way of the IB network 5.

The internal protocol handler (internal protocol processing section) 21-2 is for performing control, such as flow control, required for continuing communication within the system 1. The real storage area management section 21-3 is for managing information about a network address and capacity of the storage device 3 (disk drive' 31) present in the system 1. The cache area management section 21-4 is for managing a memory area of the cache device 4 (memory 44) and has information about the network address and capacity of the cache device 4 (memory 44) and assigns the memory area in accordance with a request output from the virtual storage management section 21-5. Put another way, the cache area management section 21-4 collectively manages the memory areas of the cache device 4 through use of virtual storage addresses.

Furthermore, the virtual storage management section 21-5 manages memory areas of the plurality of storage devices 3 as virtual storage areas of specific sizes, by means of collectively managing memory areas of the plurality of storage devices 3 (disk drives 31) through use of the virtual storage addresses, as well as managing where the data requested by the client 7 (requested through use of the virtual storage address) are reserved in the system 1. In the present embodiment, such management is embodied by retaining management tables (data of table format), such as Tables 1 and 2 provided below.

**Table 1 Map of Virtual Storage and Real Areas of Storage Device**

| Virtual Storage ID | Virtual Sector Range | Real Storage ID | Sector Range of Real Storage |
|---|---|---|---|
| 00 | 0-999 | 00 | 0-999 |
| | 1000-1999 | 01 | 0-999 |
| | 2000-2999 | 02 | 0-999 |
| 01 | 0-999 | 10 | 0-999 |
| | 0-999 | 11 | 0-999 |
| 02 | Striping | 20 | 0-999 |
| | | 21 | 0-999 |
| | | 22 | 0-999 |

**Table 2 Map of Virtual Storage and Real Areas of Cache Device**

| IB Address | Memory Address | Virtual Storage ID | Virtual Sector | Real Storage | Real Storage Sector | Flag |
|---|---|---|---|---|---|---|
| #0 | 10 | 00 | 0 | 00 | 0 | |
| #1 | 01 | 01 | 0 | 10 | 200 | |

The management tables shown in Tables 1 and 2 manage, in an associated manner, a storage image provided to the client 7 by the controller 2 and which of the storage device 3 or the cache device 4 actually stores the entity of data against the storage image. For instance, the management table shown in Table 1 shows a map correlating the virtual storage and the memory area ((sector) of the disk drive 31) of real storage, thereby showing a correspondence between a sector of the virtual storage and a sector of the disk drive 31.

A virtual storage ID = 00 signifies that three disk drives 31 (real storage IDs = 00, 01, 02) are taken as a single virtual storage sequentially having sector groups (0 to 999) of the disk drives as virtual sector groups (in other words, the three disk drives 31 are seen as a single virtual disk by the client 7). Further, a virtual storage ID = 01 shows the case of so-called "mirorring." A virtual storage ID = 02 shows a case of so-called "striping."

Meanwhile, Table 2 is a management table for managing the data cached in the cache device 4 among the data managed by the management table shown in Table 1. For instance, a first row of Table 2 signifies that the data stored in a virtual sector = 0 (sector = 0 of the real storage ID = 00) of the virtual storage (formed from the three disk drives 31) specified by the virtual storage ID = 00 are cached in a memory address = 10 of the memory 44 within the cache device 4 specified by an IB address = #0.

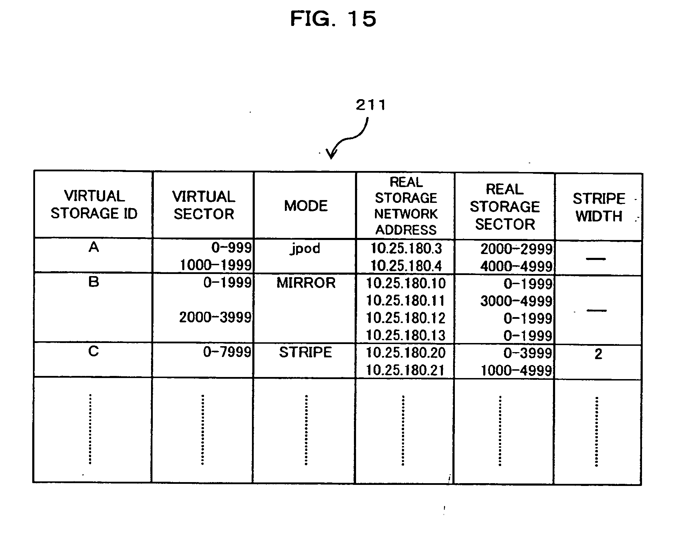

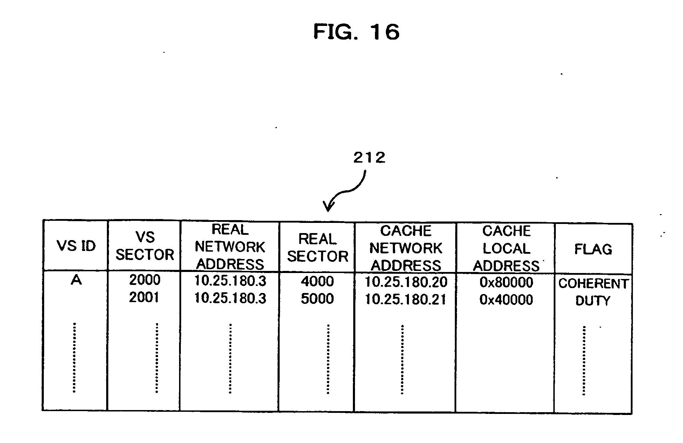

More detailed specific examples of the management tables will be described later by reference to Figs. 15 and 16.

After having retrieved and specified a location where the data are present, on the basis of the management tables provided in Tables 1 and 2 in synergy with the virtual storage management section 21-5, the DAFS protocol handler 21-1 issues a data transfer instruction (hereinafter simply called a "transfer instruction") to a corresponding component (the cache device 4 or the storage device 3).

First, the DAFS protocol handler 21-1 retrieves the cached data by reference to Table 2. If the cache data are present, the transfer instruction is issued to the cache device 4 that retains the cache data. If not, the transfer instruction is issued to the storage device 3.

The message transceiving section 21-6 generates a message, such as the transfer instruction and the RDMA (Remote Direct Memory Access), and sends the message to the IB network 5. The message transceiving section 21-6 also receives a message, such as the DAFS processing request transferred from the IB network 5 and an acknowledgment (Acknowledgment) output from the storage device 3 or the cache device 4.

Operation of the storage system 1 of the present embodiment having the foregoing configuration will be described hereinbelow.

### (1) When the data to be transferred are present in the cache device 4

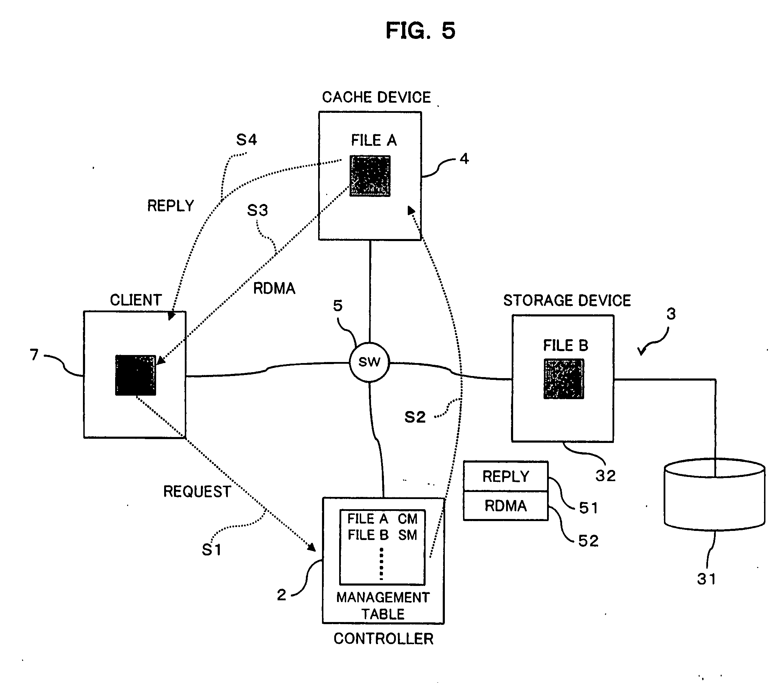

As shown in Fig. 5, the DAFS processing request (a request for access to a file A: Request File A) is assumed to have been issued from a certain client 7 to the controller 2 by way of the IB network 5 (step S1: an access-request-issuing step). In the controller 2, when the message transceiving section 21-6 has received the access request, the DAFS protocol handler 21-1 analyzes the received message, to thus ascertain contents of the message (the request for access to the file A).

Next, the DAFS protocol handler 21-1 determines whether or not the file A for which the request has been issued is cached in the cache device 4, by retrieving the management table shown in Table 2 in synergy with the virtual storage management section 21-4. On the assumption that the file A is cached in the cache device 4, the DAFS protocol handler 21-1 issues, to the cache device 4, a transfer instruction for transferring the file A to the client 7 (specified by an IP (Internet Protocol) address or the like) that has originally issued the request for access to the file A (step S2: a transfer-instruction-issuing step).

At this time, the DAFS protocol handler 21-1 also generates a message (a reply message 51 or an RDMA message 52) required by the cache device 4 to transfer data, by means of carrying out negotiation directly with the client 7, and sends the message to the cache device 4 along with the transfer instruction. At least the position in the cache device 4 where the file A is stored (memory address) and information about the size of the file A (sector range) are stored in the RDMA message 52.

When the cache device 4 has received the transfer instruction from the controller 2, the protocol handler 43 analyzes details of the transfer instruction and, consequently, ascertains that the instruction specifies transfer of the file A to the client 7. Then, the protocol handler 43 reads the target file A by means of reading data equal to a specified size from the storage position specified by the RDMA message 52, in synergy with the memory area management section 42.

The protocol handler 43 transfers the read file A directly to the client 7 by way of the IB network 5 by means of the RDMA message (step S3: a direct transfer step) and completes transfer of the file A by sending the reply message 51 received from the controller 2 (step S4).

### (2) When the data to be transferred are present in the storage device 3

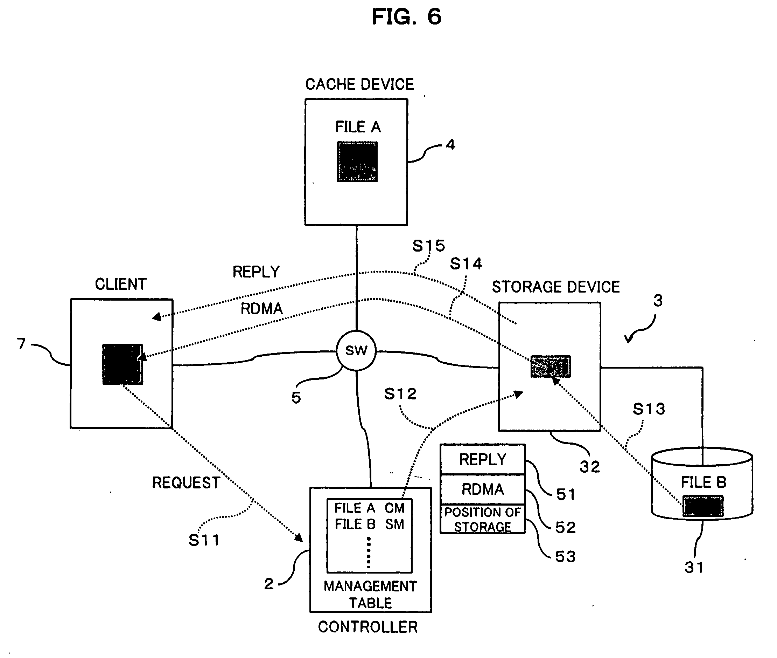

As shown in Fig. 6, the DAFS processing request (a request for access to a file B: Request File B) from a certain client 7 is sent to the controller 2 by way of the IB network 5 (step S11). In the controller 2, when the message transceiving section 21-6 receives the transfer instruction, the DAFS protocol handler 21-1 analyzes the received message, thereby ascertaining contents of the message (the request for access to the file B).

Next, the DAFS protocol handler 21-1 determines whether or not the file B for which the request has been issued is cached in the cache device 4, by retrieving the management table shown in Table 2 in synergy with the virtual storage management section 21-4. On the assumption that the file B is not cached in the cache device 4, the DAFS protocol handler 21-1 further retrieves the management table shown in Table 1 in synergy with the virtual storage management section 21-4, thereby specifying the storage device 3 (disk drive 31) reserving the file B for which the request has been issued.

The DAFS protocol handler 21-1 issues, to the storage device 3, a transfer instruction for transferring the file B to the client 7 (specified by an IP (Internet Protocol) address or the like) that has originally issued the request for access to the file B (step S12).

At this time, the DAFS protocol handler 21-1 also generates a message (the reply message 51, the RDMA message 52, and storage access information (a message) 53 showing the position in the disk drive 31 where the file B is stored) required by the storage device 3 to transfer data, by means of carrying out negotiation directly with the client 7, and sends the message to the storage device 3 along with the transfer instruction. The position of a leading sector of the file B in the disk drive 31 and information about the size of the file B are stored in the storage access information 53.

When the storage device 3 has received the transfer instruction from the controller 2, the protocol conversion section 34 interprets the transfer instruction. In accordance with details of the instruction, the SCSI interface 35 accesses the disk drive 31 on the basis of the storage access information 53, thereby reading from the disk drive 31 the file B specified by the information about the position of the leading sector and the size (step S13).

The SCSI interface 35 transfers the result of access (the file B), by way of the protocol conversion sections 34 and the TCA 33, directly to the client 7 in the form of the RDMA message over the IB network 5 (step S14) and returns the reply message to the client 7 again over the IB network 5 (step S15).

As mentioned above, the cache device 4 having the large-capacity memory 44 is mounted in the storage system 1 of the present embodiment, and the request (access request) output from the client 7 is received by the controller 2. However, real transfer processing and real processing of a reply to the client 7 are performed directly by the cache device 4 (or the storage device 3) while bypassing the controller 2. Therefore, there is enabled an attempt to significantly diminish latency and greatly improve a data throughput (ensure a band where the performance of the IB network 5 can be sufficiently exhibited).

In the aforementioned embodiment, the controller 2 intensively generates and issues the transfer instruction, the reply message 51, and the RDMA message 52, and hence the data transfer control to be performed in the system 1 is simplified, and the system has an advantage in terms of maintenance.

### (3) First Modification

In the embodiment described by reference to Fig. 5, the controller 2 prepares the reply message 51 and the DRAM message 52 and passes the messages to the cache device 4. However, these messages may be prepared by the cache device 4.

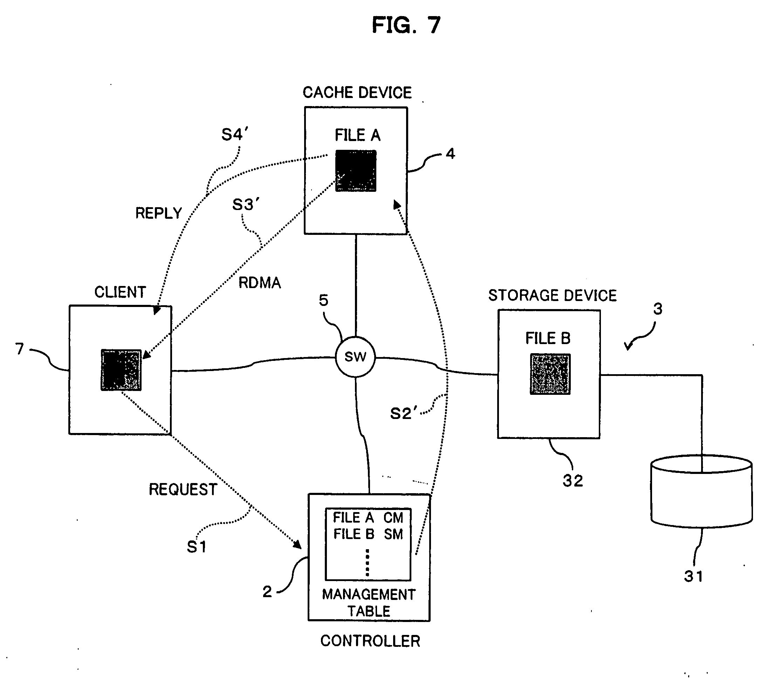

Specifically, as shown in Fig. 7, the controller 2 (DAFS protocol handler 21-1) sends positional information about the file A-for which the access request has been issued- (the memory address of the cache device 4) directly to the cache device 4 while attaching the information to the transfer instruction to be delivered to the cache device 4 (step S2'). The cache device 4 originally generates a message (the RDMA message, the reply message, or the like) required for negotiation with the client 7, from the information sent from the controller 2 by means of the protocol handler 43 and performs processing for transferring the requested file A to the client 7 (steps S3', S4').

### (4) Second Modification

Similarly, even in the embodiment described by reference to Fig. 6, the reply message 51 and the RDMA message 52 may be prepared by the storage device 3 rather than by the controller 2.

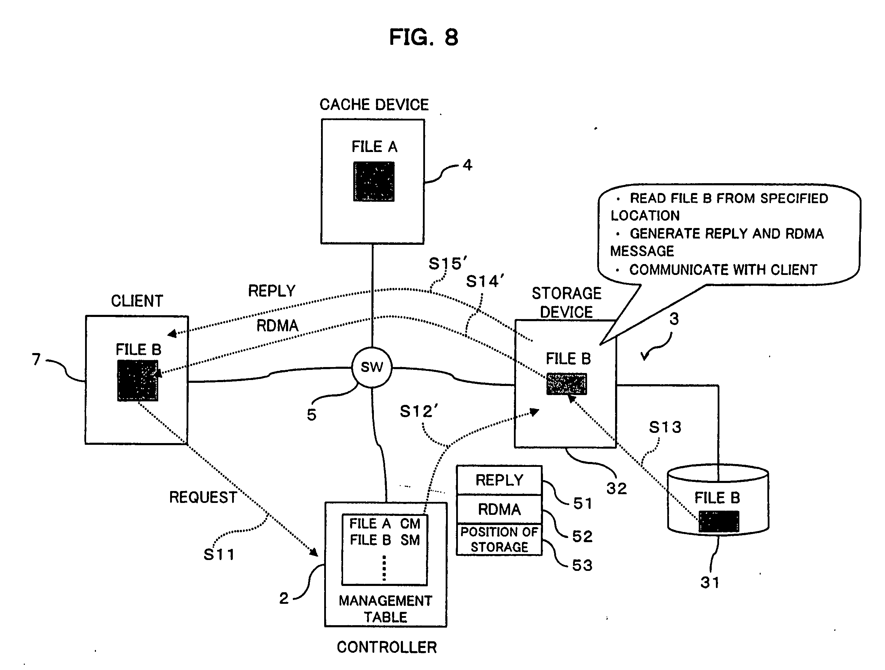

Specifically, as shown in Fig. 8, the controller 2 (DAFS protocol handler 21-1) sends positional information about the file B-for which the access request has been issued-directly to the storage device 3 while attaching the information to the transfer instruction to be delivered to the storage device 3 (step S12'). The storage device 3 reads the file B from the disk drive 41 in accordance with the information 53 sent from the controller 2 (step S13); originally generates the message (the RDMA message, the reply message, or the like) required for negotiation with the client 7 by means of the protocol conversion section 34; and performs processing for transferring the file B to the client 7 (steps S14', S15').

By means of the first and second modifications, the processing load on the controller 2 can be distributed to the cache device 4 or the storage device 3. Therefore, the system 1 is expected to be established inexpensively by means of miniaturizing and reducing costs of the controller by means of, e.g., curtailing the performance required by the controller 2.

### (5) Third Modification

In the embodiment previously described by reference to Fig. 5, the controller 2 sends to the cache device 4 only a transfer instruction pertaining to the file A associated with the RDMA message 52, thereby causing the cache device 4 to make the RDMA to the client 7. The controller 2 can also be caused to perform remaining processing operations (generation and delivery of the reply message 51).

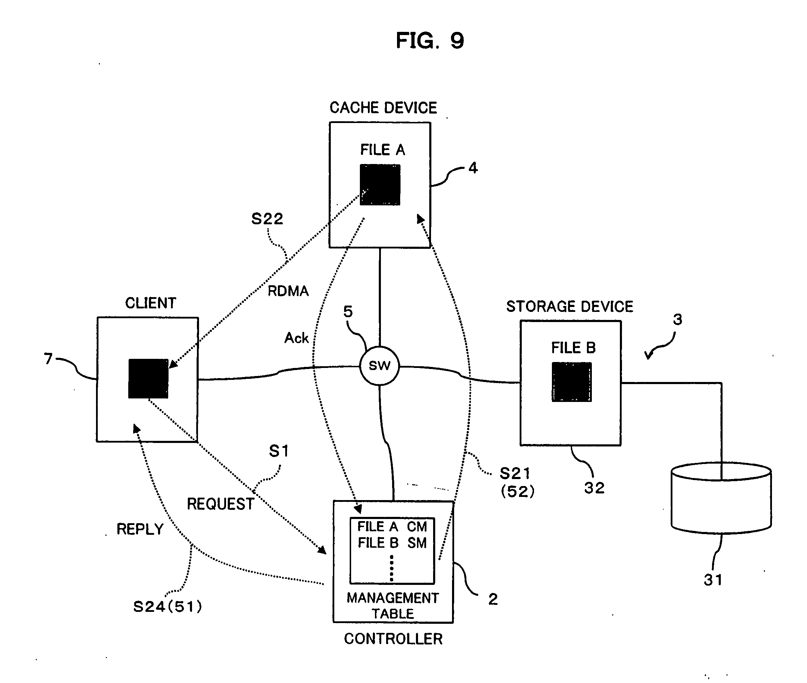

Specifically, as shown in Fig. 9, when the controller 2 (the DAFS protocol handler 21-1) has received the request for access to the file A from the client 7 (step S1), the DAFS protocol handler 21-1 generates the RDMA message 52 as a message which is required by the cache device 4 to perform data transfer by means of carrying out negotiation directly with the client 7 and sends the message to the cache device 4 along with the transfer instruction pertaining to the file A (step S21). Even in this case, at least a position in the cache device 4 where the file A is stored (memory address) and the size information (sector range) about the file A are stored in the RDMA message 52.

When the cache device 4 has received the transfer instruction from the controller 2, the protocol handler 43 analyzes details of the instruction and reads the object file A from the storage position specified by the RDMA message 52 in synergism with the memory area management section 42. The thus-readmessage is transferred directly to the client 7 by way of the IB network 5 by means of the RDMA message (step S22).

After completion of transfer operation, the protocol handler 43 generates an acknowledgment message addressed to the controller 2 and sends the thus-generated message to the controller 2 by way of the IB network 5 (step S23). In the controller 2 having received the acknowledgment message, the DAFS protocol handler 21-1 generates a reply message addressed to the client 7 and sends the message to the client 7 by way of the IB network 5 (step S24).

### (6) Fourth Modification

Similarly, even in the embodiment described by reference to Fig. 6, the controller 2 sends to the storage device 3 only a transfer instruction pertaining to the file B associated with the RDMA message 52 and the storage access information 53, thereby causing the storage device 3 to make the RDMA to the client 7. The controller 2 can also be caused to perform remaining processing operations (generation and delivery of the reply message 51).

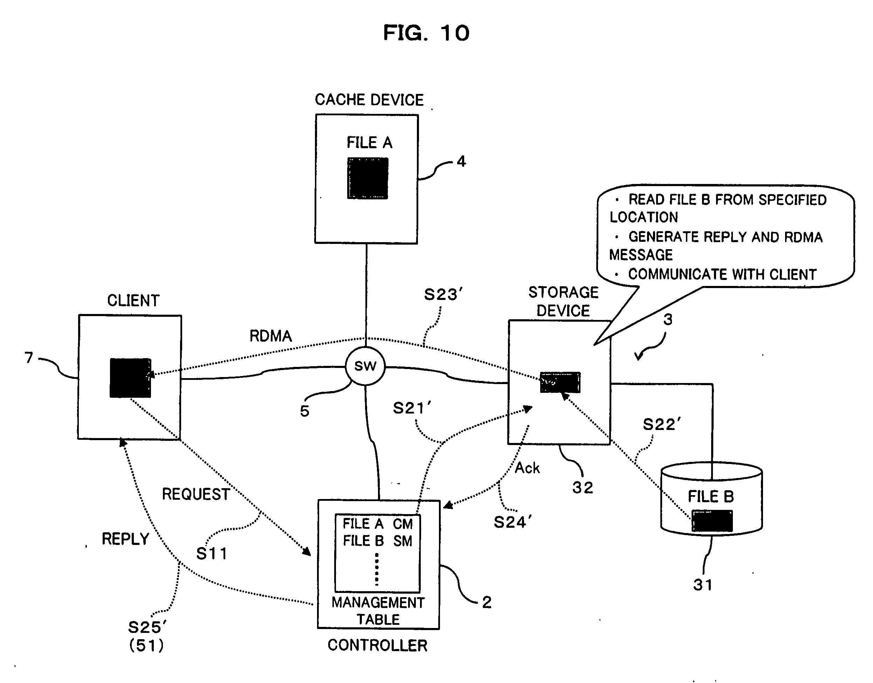

Specifically, as shown in Fig. 10, when the controller 2 has received the request for access to the file B from the client 7 (step S11), the DAFS protocol handler 21-1 in the controller 2 analyzes details of the received message and specifies the storage device where the requested file B is reserved (the disk drive 31) in synergism with the virtual storage management section 21-4.

The DAFS protocol handler 21-1 sends, to the specified storage device 3, the RDMA message 52 and the storage access information 53 while attaching the messages to the transfer instruction pertaining to the file B (step S21'). Even in this case, information about the position of the leading sector of the file B in the disk drive 31 and the size of the same is stored in the storage access information 53.

When the storage device 3 has received the transfer instruction from the controller 2, the protocol conversion section 34 interprets the transfer instruction. In accordance with details of the instruction, the SCSI interface 35 accesses the disk drive 31 on the basis of the storage access information 53, thereby reading from the disk drive 31 the file B specified by the information about the position of the leading sector and the size (step S22').

The SCSI interface 35 transfers the result of access (the file B), by way of the protocol conversion sections 34 and the TCA 33, directly to the client 7 in the form of the RDMA message over the IB network 5 (step S23'). After completion of the transfer operation, the protocol conversion section 34 sends a report to this effect to the controller 2 by way of the IB network 5 by means of the acknowledgment message (step S24'). Upon receipt of this report (acknowledgment message), the controller 2 generates the reply message 51 addressed to the client 7, by means of the DAFS protocol handler 21-1 and sends the message to the client 7 by way of the IB network 5 (step S25').

As in the case of the above-described third and fourth modifications, when compared with the embodiment shown in Figs. 5 and 6, the processing load on the controller 2 can be distributed to the cache device 4 or the storage device 3 by burdening the cache device 4 or the storage device 3 with a part of generation of the message required for negotiation with the client 7.

### (7) Fifth Modification

Next will be described transfer processing performed by the system 1 when the plurality of cache devices 4 retain the same data redundantly with a view toward enhancing the reliability of data (so-called mirroring).

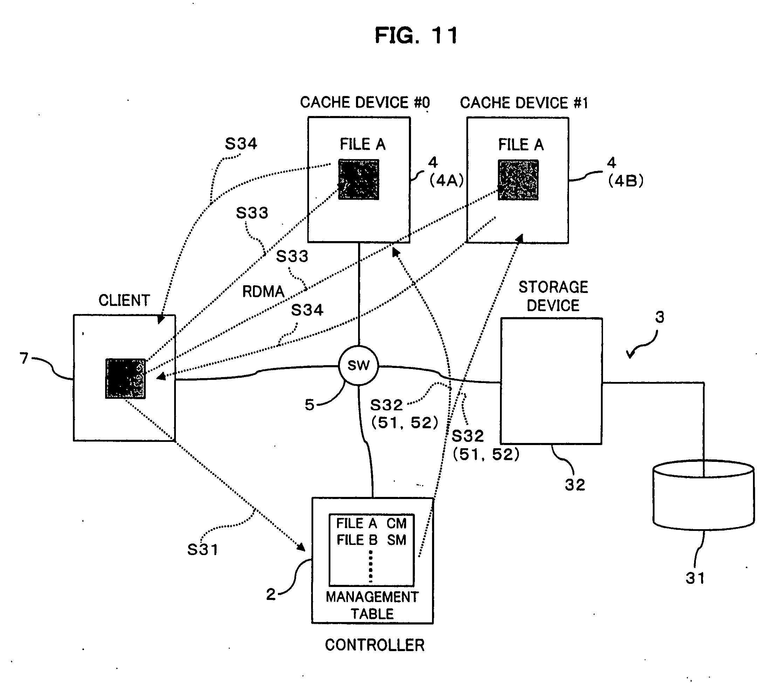

As shown in Fig. 11, a request (a write access) for access to the file A is assumed to have been issued from the client 7 to the controller 2 by way of the IB network 5 (step S31).

When the controller 2 has received the access request, the DAFS protocol handler 21-1 analyzes the received message and specifies (selects) cache devices 4A and 4B where the requested file A is to be reserved, in synergism with the virtual storage management section 21-4. The DAFS protocol handler 21-1 generates, for the respective cache devices 4A, 4B, the messages (the reply messages 51 and the RDMA messages 52) required for communication with the client 7 and sends the messages to the cache devices 4A, 4B while attaching the messages to the transfer instruction (step S32). In this case, each of the RDMA messages 52 requires information about the memory addresses and sizes of the respective cache devices 4A, 4B where the file A is to be retained.

When the cache devices 4A, 4B have received the transfer instruction from the controller 2 as mentioned previously, the protocol handler 43 analyzes details of the instruction; receives the file A directly from the client 7 by way of the IB network 5 through use of the RDMA messages 52 received from the controller 2 in synergism with the memory area management section 42; and writes the files into the memory 44 (step S33).

Subsequently, after the client 7 has finished making the RDMA to the respective cache devices 4A, 4B, the protocol handlers 43 of the respective cache devices 4A, 4B return replies to the client 7 by means of the reply messages 51 received from the controller 2 (step S34). The client 7 terminates the transfer operation (the mirroring) upon receipt of the replies from all the cache devices 4A, 4B.

As mentioned above, according to the modifications, even when the mirroring is performed, the respective cache devices 4 carry out negotiation required for data transfer (exchange of the messages) with the client 7 in accordance with the transfer instruction from the controller 2. Real data transfer and reply processing are performed directly between the client 7 and the plurality of cache devices 4 while bypassing the controller 2. Hence, an attempt can be made to enhance reliability while curtailing the latency of the system 1 and improving a data throughput.

In the foregoing example, it may be the case that the transfer operation is completed when any one of the cache devices 4A, 4B has returned a reply. In such a case, the necessity for all the cache devices 4 sending the reply message to the client 7 is obviated. Hence, it may be the case that only some of the cache devices 4 send both the reply message 51 and the RDMA message 52, and the remaining cache devices 4 send only the RDMA message 52.

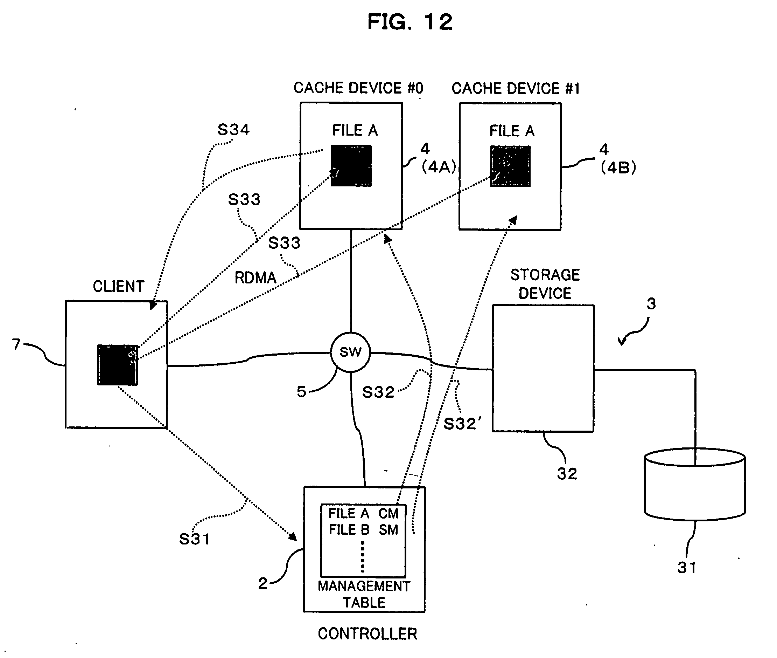

Specifically, as shown in Fig. 12, when the controller 2 has received the request for access to the file A from the client 7, the controller 2 sends the transfer instruction having the reply message 51 and the RDMA message 52 attached thereto to one cache device; e.g., the cache device 4A (step S32) and sends to the remaining cache device 4B the transfer instruction having only the RDMA message 52 attached thereto (step S32').

Thereby, after the respective cache devices 4A, 4B have made RDMA to the client 7 in connection with the file A (step S33), only the cache device 4A having received the reply message 51 from the controller 2 sends the reply message 51 to the client 7 (step S34).

Through the foregoing operations, the processing load on the controller 2 can be reduced, and the processing load on some of the cache devices 4 can also be lessened.

### (8) Sixth Modification

Next, a modification of transfer processing to be performed during the "mirroring" will be described. In this case, the controller 2 does not issue any transfer instruction to all the cache devices 4 but issues a transfer instruction to one of the cache devices 4. The same data are copied from that cache device 4 to the other cache devices 4, thereby realizing mirroring.

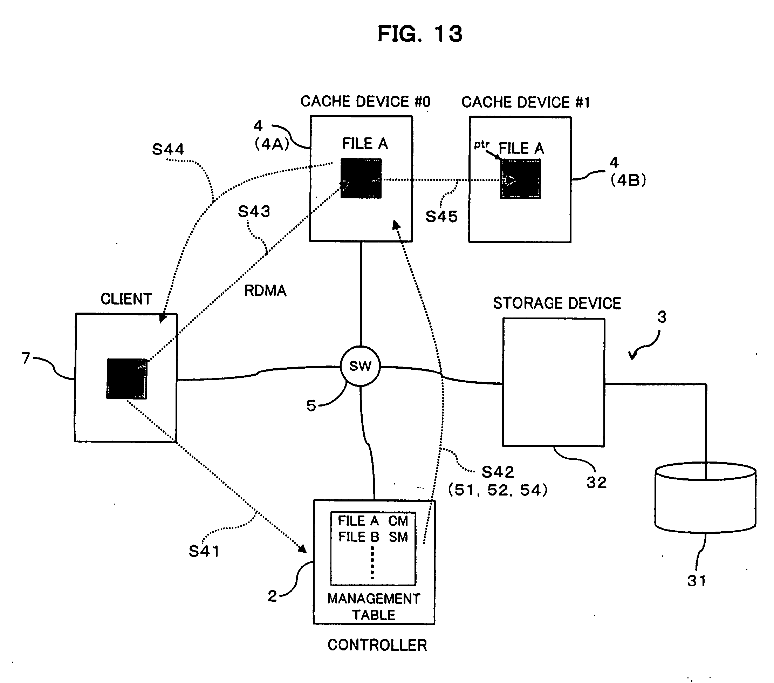

Specifically, as shown in Fig. 13, when the request (write request) for access to the file A is assumed to have been issued by the client 7 to the controller 2 (step S41), the DAFS protocol handler 21-1 of the controller 2 issues, to the cache device 4A, for example, the transfer instruction used by the cache device 4A to receive the file A from the client 7 by way of the IB network 5 (step S42).

At this time, the DAFS protocol handler 21-1 generates the reply message 51 and the RDMA message 52, as well as generating the address information 54 about the cache device 4B which is the destination of copy of the file A. These messages and information are attached to the transfer instruction addressed to the cache device 4A. Even in this case, the RDMA message 52 requires the memory address of the cache device 4 and information about the size of the file A.

The cache device 4A having received the transfer instruction from the controller 2 receives the file A transferred from the client 7 by means of the RDMA message 52 generated by the controller 2 (step S43). When the transfer operation has been completed, the reply is sent back to the client 7 by means of the reply message 53 received from the controller 2 (step S44). The cache device 4A specifies the cache device 4B, which is a destination of copy, on the basis of the address information 54 received from the controller 2. The file A received from the client 7 is copied to the memory 44 of the cache device 4B (step S45). The copying can be performed by means of RDMA.

By means of the above-described operation, the number of messages exchanged within the system 1 is curtailed, so that the "mirroring" for enhancing the reliability of the system 1 can be realized without involving a decrease in the data throughput of the system 1.

### (9) Seventh Modification

As mentioned previously by reference to Figs. 11 to 13, when the "mirroring" is performed by means of the plurality of cache devices 4, the data redundantly retained by some of the cache devices 4 are transferred to the storage device 3 at a certain time, thereby releasing the memory areas of the memory 44 of the cache device 4.

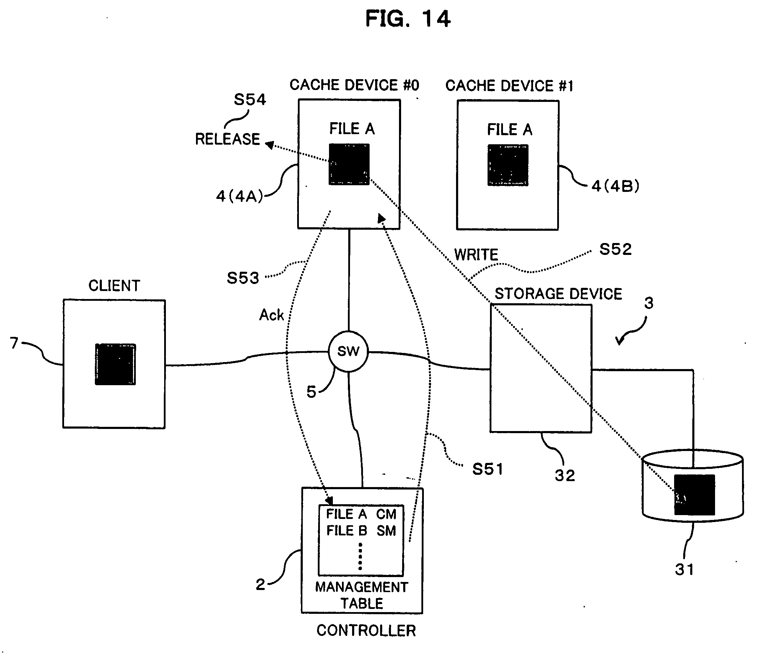

Specifically, as shown in Fig. 14, the controller 2 issues, to at least one of the cache devices 4A and 4B redundantly retaining the same file A, an instruction for transferring the file A to the storage device 3 at a certain time (step S51). As a matter of course, information specifying the storage device 3 and the disk drive 31, which are destinations of transfer, is attached to the transfer instruction at this time.

The cache device 4A having received the transfer instruction transfers the file A to the disk drive 31 of the storage device 3 by means of the RDMA (step S52). After having completed the transfer operation, the cache device sends a report to this effect to the controller 2 by means of the acknowledgment message (step S53) and deletes the redundantly-stored file A from the memory 44, to thus release the memory area (step S54).

By means of the foregoing operation, redundant data involving a low frequency of access are saved from the cache device 4 to the storage device 3, thereby enabling such a control operation that redundant data involving a high frequency of access are left in the cache device 4 in a prioritized manner. Consequently, the memory capacity of the cache device 4 can be used in the most effective manner. Even when mirroring is performed, the memory capacity required by the cache device 4 can be curtailed.

### (10) Eighth Modification

Operation-which pays attention to the function of the previously-described virtual storage management section 21-5 and that of the cache area management section 21-4-will now be described hereinbelow.

As mentioned previously, the virtual storage management section 21-5 and the cache area management section 21-4 embody the virtual storage system, by means of collectively managing a correlation between a virtual storage area and a real storage area (the memory area of the storage device 3 (the disk drive 31)) and a correlation between the virtual storage area and a cache area (the memory area of the cache device 4), through use of the management table shown in Table 1 and the management table (map) shown in Table 2.

More specifically, the correlation between the virtual storage area and the real storage area is managed by a management table (a virtual storage/real storage conversion map) 211, such as that shown in Fig. 15. The correlation between the virtual storage area and the cache area is managed by a management table (cache map) 212, such as that shown in Fig. 16. As a matter of course, when no cache device 4 is present in the system, the cache area management section 21-4 (the cache map 212) is not necessary.

The virtual storage/real storage conversion map 211 retains a correlation among a "virtual storage ID," a "virtual sector," a "mode," a "real storage network address," a "real storage sector, " a "stripe width," and the like. The cache map 212 retains a correlation among the "virtual storage ID, "the "virtual sector," the "real storage net address," the "real storage sector," a "cache storage network address," a "cache local address," a flag," and the like.

For instance, it is meant that a "virtual storage ID" = a virtual storage of A (hereinafter often described as a "virtual storage A") is configured as a first entry of the virtual storage/real storage conversion map 211 by means of a "virtual sector" = "0-1999"; that the respective virtual sectors "0-999" of these sectors correspond to sectors (real storage sectors) = "2000-2999" of the storage device 3 (disk drive 31) specified by "real storage network address" = "10.25.180.3"; and that remaining virtual sectors "1000-1999" correspond to sectors (real storage sectors) = "4000-4999" of the storage device 3 (the disk drive 31) specified by the "real storage network address" = "10.25.180.4."

Here, "mode = "jbod" signifies a "concatenation." In this case, the mode means that the virtual storage A is formed from concatenation between the sector "2000-2999" of one disk drive 31 and the sector "4000-4999" of another disk drive 31. Here, the "real storage network address" is taken as data (ID) of IP address format. However, as a matter of course, an ID of another format is also available.

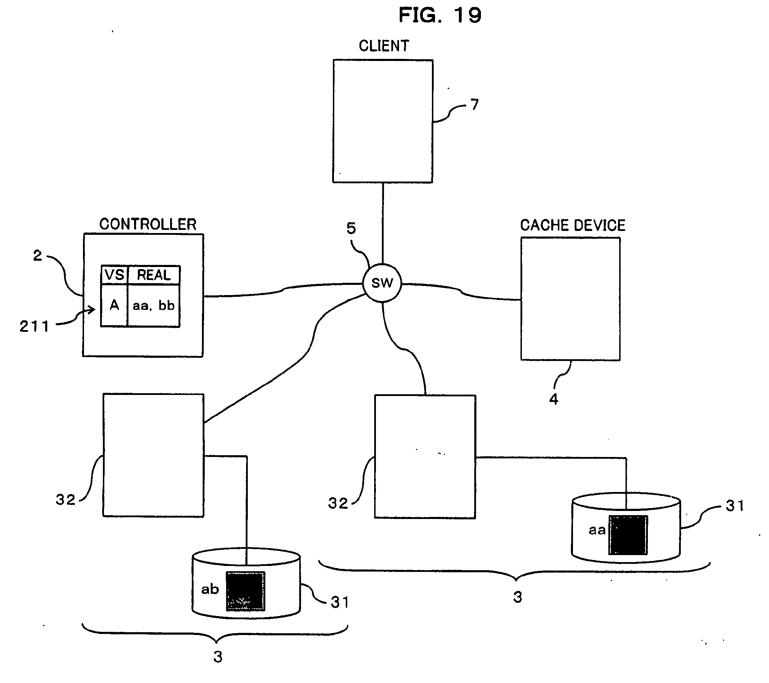

Next, it is meant that a "virtual storage ID" = a virtual storage of B is configured as a second entry of the virtual storage/real storage conversion map 211 by means of a "virtual sector" = "0-3999"; that the respective virtual sectors "0-1999" of these sectors correspond to sets of "real storage sector" = "0-1999" and "3000-4999" of the two disk drives 31 (sets are denoted by "aa" and "ab" in Fig. 19) specified by the "real storage network address" = "10.25.180.10" and "10.25.180.11"; and that the "mirroring" specified by the "mode" is performed through use of the set of real storage sectors.

Similarly, it is meant that the respective sectors "2000-3999" correspond to sets of "real storage sector = 0-1999" and "0-1999" (sets denoted as "aa" and "ab" in Fig. 19) of two disk drives 31 specified by "real storage network address "10.25.180.12" and "10.25.180.13"; and that the "mirroring" specified by the "mode" is performed through use of one set of real storage sectors.

In other words, the virtual storage management section 21-5 is considered to have the function of mirroring means which effects mirroring by means of managing a virtual storage address assigned to a specified area of the virtual storage area and real addresses assigned to the memory areas of the plurality of storage devices 3 in an associated manner. In this case, when the access request has been issued by the client 7, the data transfer instruction is issued to the respective storage devices 3, whereupon data are transferred directly between the client 7 and the storage devices 3.

Moreover, it is meant that a "virtual storage ID" = a virtual storage of C is configured as a third entry of the virtual storage/real storage conversion map 211 by means of a "virtual sector" = "0-7999"; that the respective virtual sectors "0-7999" of these sectors correspond to sets of "real storage sector" = "0-3999" and "1000-4999" of the two disk drives 31 specified by the "real storage network address" = "10.25.180.20" and "10.25.180.21"; and that the "striping" of "stripe width = 2" specified by the "mode" is performed through use of the real storage sectors.

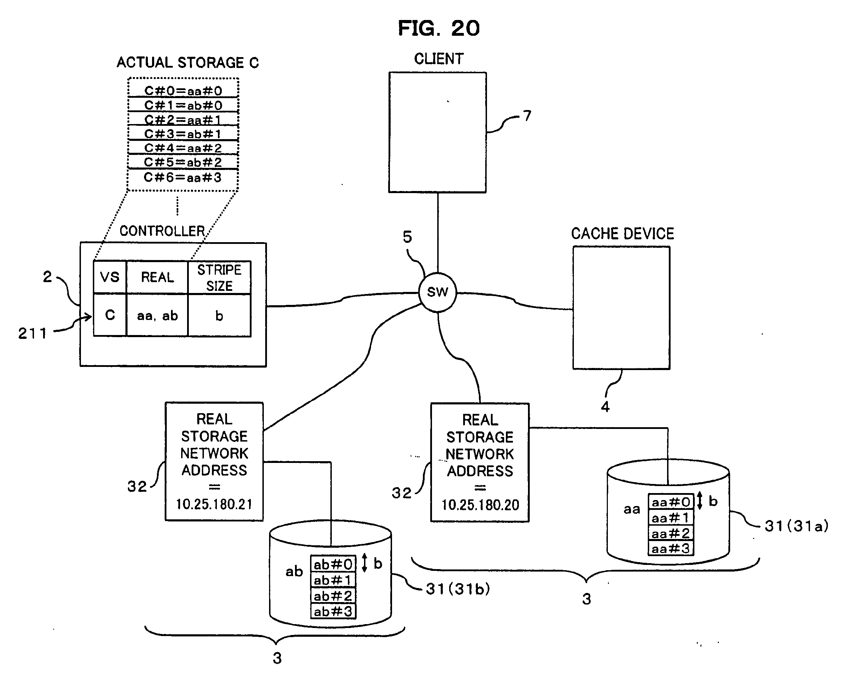

Specifically, as shown in, e.g., Fig. 20, the correlation between the "virtual sector" and the "real sector" is assumed to be C#0=aa#0, C#1=ab#0, C#2=aa#1, C#3=ab#1, C#4=aa#2, C#5=ab#2, C#6=aa#3,..., accesses to the disk drives 31a, 31b are made by access requests to virtual sectors C#0→ C#1→ C#2→ C#3→ C#4→ C#5→ C#6 → ... in sequence of a real sector aa#0 of the disk drive 31a → a real sector ab#0 of the disk drive 31b → a real sector aa#1 of the disk drive 31a → a real sector ab#1 of the disk drive 31b → a real sector aa#2 of the disk drive 31a → a real sector ab#2 of the disk drive 31b → a real sector aa#3 of the disk drive 31a →...

Put another way, in this case, the virtual storage management section 21-5 comes to have the function of striping means. The striping means implements striping, by means of managing the virtual storage addresses and the real addresses assigned to the memory areas of the plurality of storage devices 3 in an associated manner such that consecutive divided areas resulting from division of a single virtual storage area (ID=C) by a predetermined size (a stripe width) are assigned to areas within different storage devices 3 (disk drives 31).

A first entry of the cache map 212 shown in Fig. 16 means that a "virtual storage ID" = a "virtual sector" of A = "2000" corresponds to a "real sector" = "4000" of the disk drive 31 specified by a "real storage network address" = "10.25.180.3" as well as to a "cache local address" (memory address) = "0x80000" of the cache device 4 specified by a "cache network address" = "10.25.180.20."

Similarly, a second entry of the cache map 212 means that the "virtual storage ID" = the "virtual sector" of A = "2001" corresponds to a "real sector" = "5000" of the disk drive 31 specified by the "real storage network address" = "10.25.180.3" as well as to the "cache local address" (memory address) = "0x40000" of the cache device 4 specified by the "cache network address" = "10.25.180.21."

Specifically, the cache area management section 21-4 is also arranged to collectively manage the memory areas of the cache device 4 by means of the virtual storage addresses.

"Flag" = "coherent" means that the data stored in the "real sector" coincide with the data stored in the "cache local address. " "Flag" = "dirty" means that a mismatch exists between the data (the data stored in the cache device 4 are new). The "flags" further include "empty," which means that the cache area has already been assigned to the cache device 4 but effective data have not yet been stored in that area.

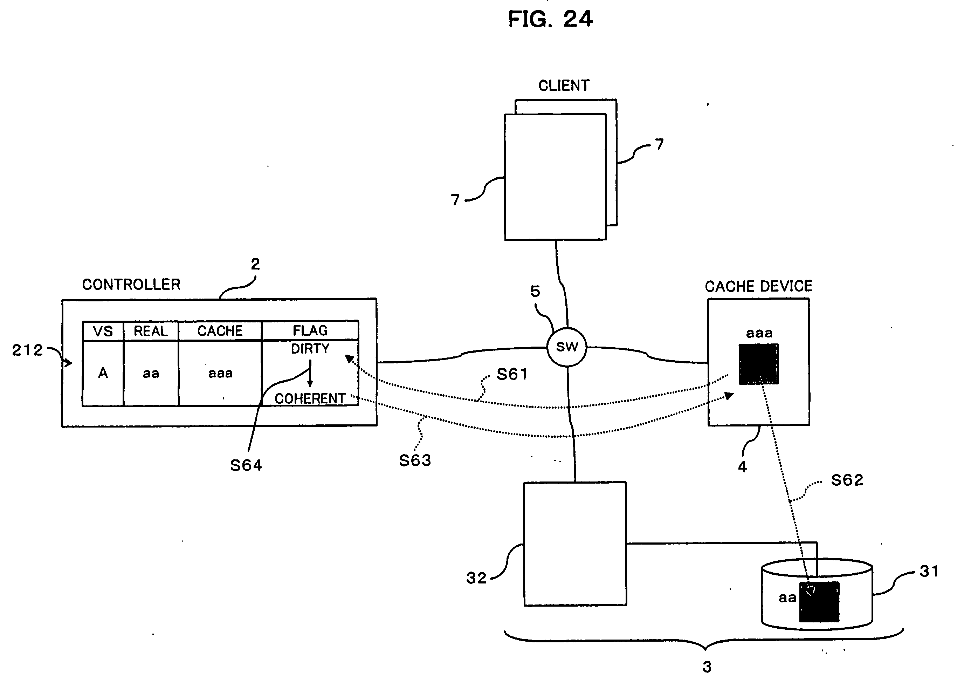

Now, in the case of "flag" = "dirty," consecutive processing such as that shown in, e.g., Fig. 24, is performed. Specifically, the controller 2 (the virtual storage management section 21-5) issues, to the cache device 4, a synchronization instruction for making the data (hereinafter also called "real data") retained in the "real sector" (aa) of the disk drive 31 match the latest data held in the "cache local address" (aaa) (step S61).

The cache device 4 having received the instruction transfers the data directly to the disk drive 31 by way of the IB network 5, thereby updating the data held in the "real sector" (aa) of the disk drive 31 to the latest data (step S62) and returning a report indicating completion of synchronization to the controller 2 as a reply (step S62). The controller 2 (the virtual storage management section 21-5) having received the reply updates the "flag" of the entry of the cache map 212 to "coherent" (step S63).

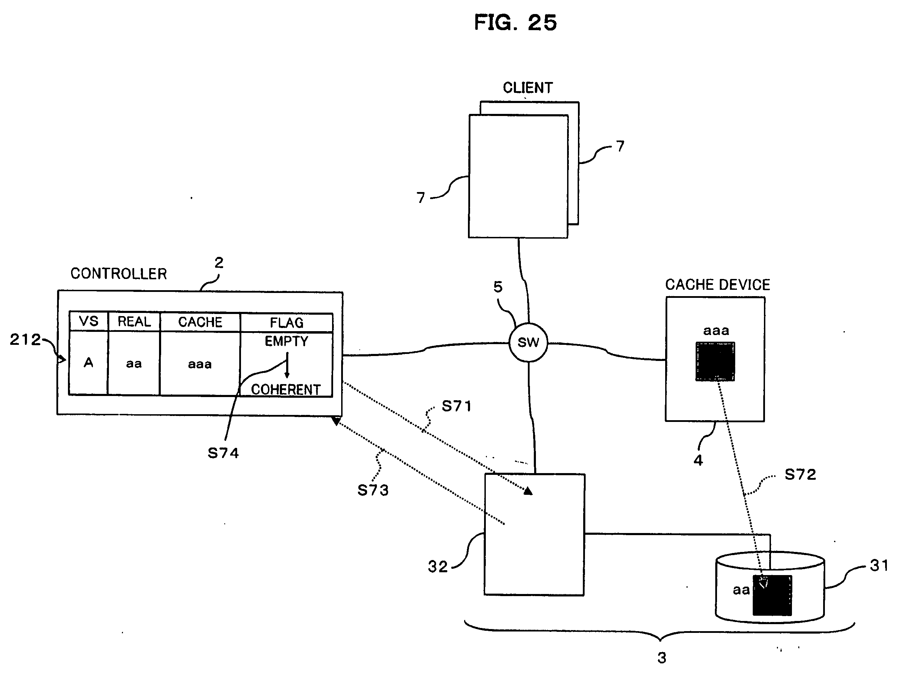

When the data are written into the cache device 4 from the disk drive 31 with the "flag" = "empty," consecutive processing such as that shown in, e.g., Fig. 25, is performed. Specifically, the controller 2 (the virtual storage device 21-5) issues to the storage device 3 an instruction for writing the data retained in the "real sector" (aa) of the disk drive 31 into the "cache local address" (aaa) of the cache device 4 (step S71).

The storage device 3 having received the instruction transfers the data stored in the "real sector" (aa) of the disk drive 31 directly to the cache device 4 by way of the IB network 5 to thereby write the data into the area of the "cache local area" (aaa) of the cache device 4 (step S72); and returns to the controller 2 a report indicating completion of writing operation (step S72). The controller 2 having received the response (the virtual storage management section 21-5) updates the "flag" of that entry of the cache map 212 to "coherent" (step S73).

Thus, the controller 2 issues an instruction to the storage device 3 or the cache device 4 on the basis of the entry of the cache map 212, thereby transferring data directly between the storage device 3 and the cache device 4 and enabling synchronization of the cache data with the real data and uploading the real data to the cache device 4 at high speed.

As mentioned above, in the present embodiment, direct transfer of data (including "mirroring" and "striping") between the client 7 and the storage device 3 or the cache device 4 in the virtual storage system becomes feasible by means of managing the maps 211, 212 by means of the controller 2 (the virtual storage management section 21-5).

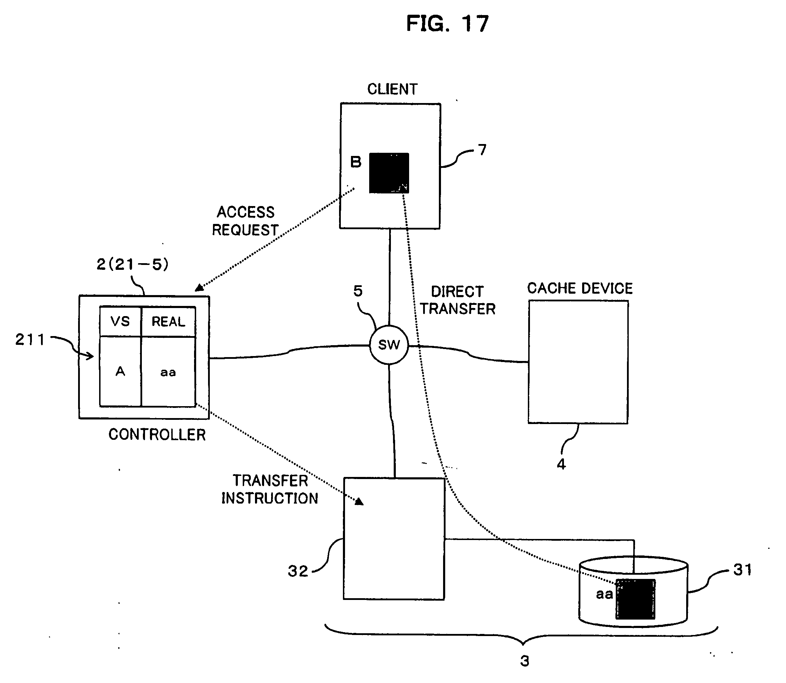

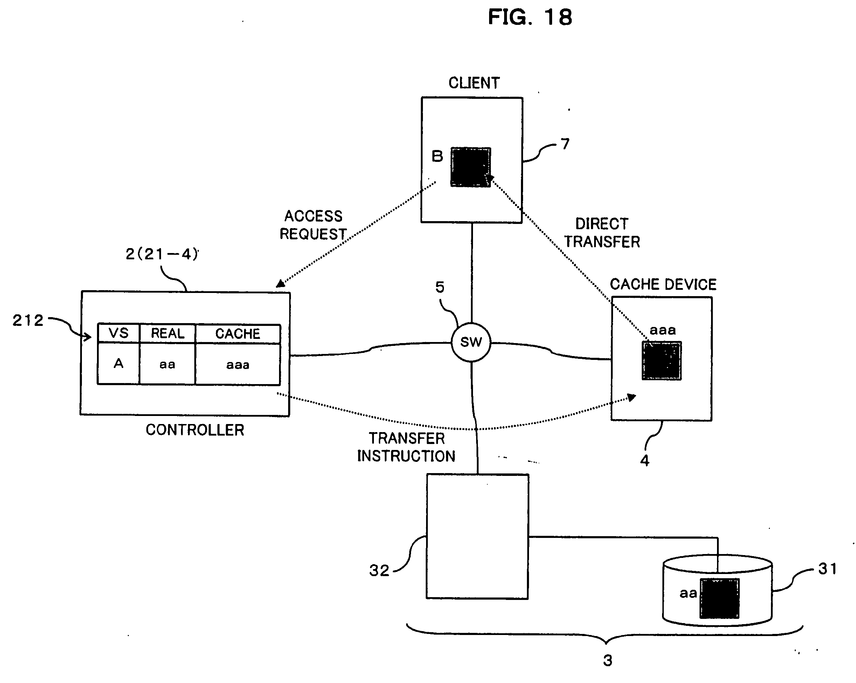

Specifically, as shown in Figs. 17 and 18, when a certain client 7 issues, to the controller 2, a request for (read) access to a certain virtual storage (through use of a virtual storage address) by way of the IB network 5, the controller 2 specifies a real storage area (real sector) retaining the requested data, in accordance with entry details of the entries of the maps 211, 212. The controller passes, to the storage device 3 or the cache device 4 managing the real sector, the information required to directly transfer data to the client 7, thereby enabling direct transfer of data between the client 7 and the storage device 3 or the cache device 4 while bypassing the controller 2.

Fig. 17 shows a case where the data retained in the real sector "aa" of the disk drive 31 are transferred directly to the client 7, and Fig. 18 shows a case where the data retained in the real sector "aaa" of the cache device 4 are transferred directly to the client 7. Detailed operations performed after the real storage areas have been specified are the same as those shown in Figs. 5 and 6.

Next will be described a case where disk drives 31 are additionally connected to the IB network 5.

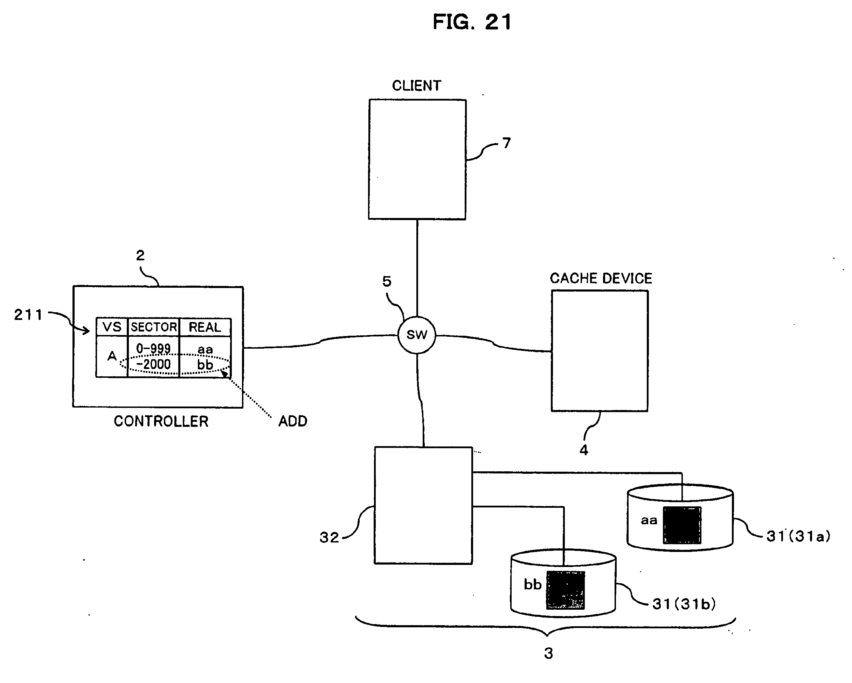

As shown in, e.g., Fig. 21, consideration is given to a case where a new disk drive 31b is provided while a disk drive 31a has already been connected to a certain interface card 32. In this case, the controller 2 (the virtual storage management section 21-5) retains, as a map 211 obtained before addition, entries associating the "virtual sectors" ("0-999") with the "real sectors" (aa = "2000-2999") of the disk drive 31a. After addition of the disk drive, entries associating the "virtual sectors" ("1000-1999") with the "real sectors" (bb = "4000-4999") of the added disk drive 31b are appended to the map 211.

As mentioned above, addition of only new entries to the map 211 enables allocation of areas (real sectors) in the storage device 3 (the disk drive 31b) corresponding to the new virtual storage areas (the virtual sectors "1000-1999") additionally to the allocated virtual storage areas (the virtual sectors "0-999").

Addition of the virtual storage areas can also be effected even in the case of the "mirroring" or "striping" configuration, by means of addition of corresponding entries to the map 211 in the same manner.

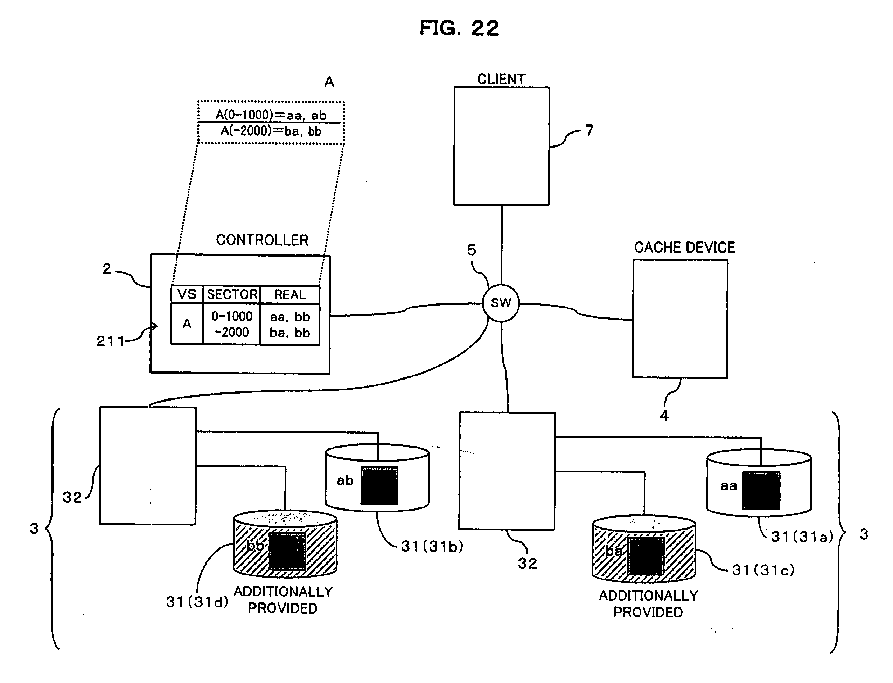

For instance, as shown in Fig. 22, when two disk drives 31c, 31d are newly added to the controller 2 (the virtual storage management section 21-5) under the situation where the entries associating the "virtual sectors" (e.g., "0-1000") with the "real sectors" (e.g., aa = "2000-3000," bb = "4000-5000") of the two disk drives 31a, 31b have already been registered in the map 211 and where "mirroring" has been realized through use of the areas (aa = "2000-3000," bb = "4000-5000") within the two disk drives 31a, 31b, theonlyrequirement is to add, to the map 211, entries associating newly-required "virtual sectors" (e.g., "1001-2000") with "real sectors" (e.g., ba = "0-999") of the disk drive 31c and the "real sectors" (e.g., bb = "2000-2999") of the disk drive 31d.

This enables "mirroring" using the areas (ba = "0-999," and bb = "2000-2999") within the newly-added two disk drives 31c, 31d.

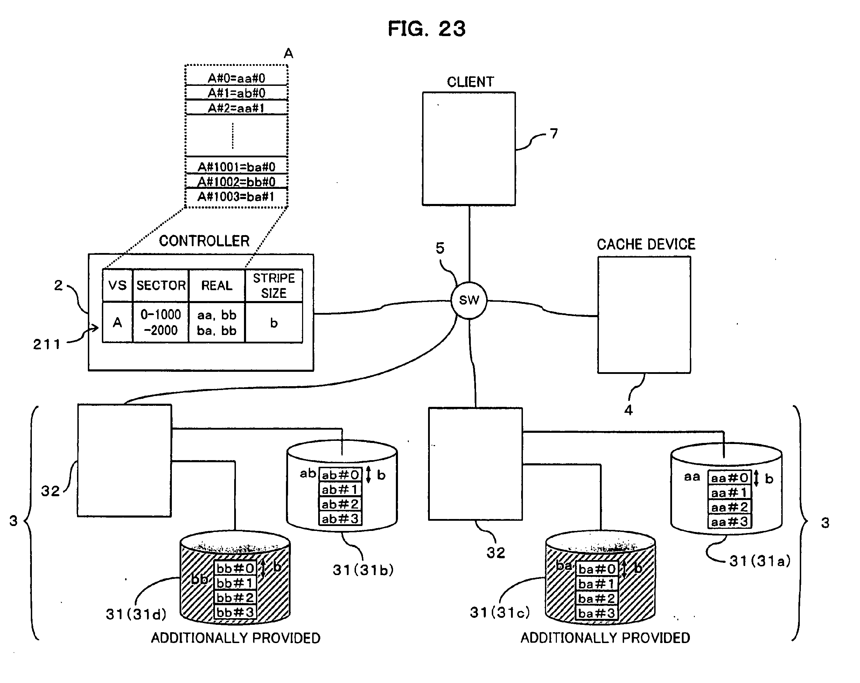

Similarly, as shown in Fig. 23, when the two disk drives 31c, 31d are newly added to the controller 2 (the virtual storage management section 21-5) under the situation where the entries associating the "virtual sectors" (e.g., "0-1000") with the "real sectors" (e.g., aa = "0-499," bb = "1000-1500") of the two disk drives 31a, 31b have already been registered in the map 211 and where "striping" having a strip width b=2 has been realized through use of the areas (aa = "0-499," bb = "1000-1500") within the two disk drives 31a, 31b, the only requirement is to add, to the map 211, entries associating newly-required "virtual sectors" (e.g., "1001-2000") with "real sectors" (e.g., ba = "1000-1499") of the disk drive 31c and the "real sectors" (e.g., bb = "3000-3499") of the disk drive 31d.

This enables "striping" that uses the areas (ba = "1000-1499," and bb = "3000-3499") within the newly-added two disk drives 31c, 31d and has a stripe width (b = 2). The stripe width of the disk drives 31a, 31b achieved before addition may change from that of the disk drives 31c, 32d achieved after addition.

It goes without saying that, even when some of the storage devices 3 are deleted (reduced) from the IB network 5, deletion can be realized by changing only the entries of the map 211.

Specifically, the virtual storage management section 21-5 has the function of virtual storage address change means which change associations between the virtual storage addresses of the virtual storage area and the real addresses of the memory areas of the storage device 3 in accordance with an increase or decrease in the number of storage devices 3 connected to the IB network 5.

As mentioned above, in the foregoing embodiments, direct transfer of data between the storage device 3 or the cache device 4, and the client 7 while bypassing the controller 2 enables an attempt to significantly curtail latency and improve a data throughput (assurance of a band where the performance of the IB network 5 can be sufficiently exhibited) as well as providing a function which won't be subordinate to the conventional virtual storage system.

### (11) Others

The present invention is not limited to the previously-described embodiments and, needless to say, can be carried out while being modified in various manners falling within the scope' of the invention as claimed.

For instance, the foregoing embodiments are based on the premise that the access request issued from the client 7 by way of the IB network 5 is based on DAFS. However, the same working effect can be yielded even when the access request is based on another protocol [e.g., SRP (SCSI RDMA Protocol)].

Formats of the various messages exchanged within the IB network 5 can be changed, as required.

### Industrial Applicability

As has been described, according to the present invention, the cache device (or the storage device) provided in the storage system directly transfers data by carrying out negotiation required for data transfer with the client device in accordance with the instruction from the controller. Therefore, latency of the system can be diminished, and a significant improvement in the data throughput can be achieved. For instance, a high-speed, high-performance data center or the like can be constructed, and the center is considered to have extremely high usefulness.

## Claims

1. A storage system comprising:
a storage device (3) storing data;
a cache device (4) capable of caching said data stored in said storage device (3);
a controller (2) controlling access to at least said storage device (3) and said cache device (4); and
an internal network (5) interconnecting said storage device (3), said cache device (4), and said controller (2) so as to enable communications therebetween, wherein
said controller (2) includes transfer instruction issuing means (21-1) which issues a data transfer instruction to one of said cache device (4) and said storage device (3) upon receipt of an access request transmitted, by way of said internal network (5), from a client device (7) connected to said internal network (5) in an accessible manner; and
at least one of said storage device (3) and cache device (4) which receives said data transfer instruction includes direct transfer means (34 or 43) for performing direct transfer of data to said client device (7) by means of directly carrying out negotiation required for data transfer with said client device (7) in accordance with said data transfer instruction from said controller (2).

2. A data transfer method for use in a storage system having a storage device (3) storing data, a cache device (4) capable of caching said data stored in said storage device (3), a controller (2) controlling access to at least said storage device (3) and said cache device (4), and an internal network (5) interconnecting said storage device (3), said cache device (4), and said controller (2) so as to be enable communications therebetween, the method comprising:
an access request issuance step (S1) of a client device (7) connected to said internal network (5) in an accessible manner, that issues an access request to said controller (2) by way of said internal network (5);
a transfer instruction issuance step (S2) of said controller (2) that issues a data transfer instruction to either said cache device (4) or said storage device (3) upon receipt of said access request; and
a direct transfer step (S3) of one of said cache device (4) and said storage device (3) carrying out direct negotiation required for transfer of data with respect to said client device (7), thereby transferring data directly to said client device (7).

3. The data transfermethod for use in a storage system according to claim 2, wherein said controller (2), in said transfer instruction issuance step (S2), generates a message for said negotiation to be carried out between said client device (7) and said cache device (4) and transmits said message to said cache device (4) along with said data transfer instruction; and
said cache device (4), in said direct transfer step (S3), transfers data to said client device (7) through use of said message generated by said controller (2).

4. The data transfer method for use in a storage system according to claim 2, wherein said controller (2), in said transfer instruction issuance step (S2), generates a message for said negotiation to be carried out between said client device (7) and said storage device (3) and transmits said message to said storage device (3) along with said data transfer instruction; and
said storage device (3), in said direct transfer step (S3), transfers data to said client device (7) using said message generated by said controller (2).

5. The data transfer method for use in a storage system according to claim 2, wherein said controller (2), in said transfer instruction issuance step (S2) generates a message for said negotiation to be carried out between said client device (7) and said cache device (4) and transmits said message to said cache device (4) along with said data transfer instruction; and
said cache device (4), in said direct transfer step (S3), generates said message on the basis of said message information transmitted from said controller (2) and transfers data to said client device (7) through use of said message.

6. The data transfer method for use in a storage system according to claim 2, wherein said controller (2), in said transfer instruction issuance step (S2), transmits a message required for establishing said negotiation between said client device (7) and said storage device (3) to said cache device (4) along with said data transfer instruction; and
said storage device (3), in said direct transfer step (S3), generates said message on the basis of said message information transmitted from said controller (2) and transfers data to said client device (7) through use of said message.

7. The data transfermethod for use in a storage system according to claim 3 or 5, wherein said cache device (4) issues an acknowledgment message to said controller (2) by way of said internal network (5) when said data transfer pertaining to said direct transfer step (S3) has been completed; and
said controller (2) issues a reply message indicating completion of data transfer to said client device (7) by way of said internal, network (5) upon receipt of said acknowledgement message from said cache device (4).

8. The data transfer method for use in a storage system according to claim 4 or 6, wherein said storage device (3) issues an acknowledgment message to said controller (2) by way of said internal network (5) when said data transfer pertaining to said direct transfer step (S3) has been completed; and
said controller (2) issues a reply message indicating completion of data transfer to said client device (7) by way of said internal network (5) upon receipt of said acknowledgment message from said storage device (3).

9. The data transfer method for use in a storage system according to claim 2, wherein, in a case where two or more cache devices (4) are provided, said controller (2), in said transfer instruction issuance step (S2), generates a message required for said negotiation to be carried out between said client device (7) and said cache devices (4A, 4B) and transmits said message to said cache devices (4A, 4B) along with said data transfer instruction;
said cache devices (4A, 4B), in said direct transfer step (S3), transfer data to said client device (7) through use of said message generated by said controller (2); and
any one of said cache devices (4A, 4B) transmits a message indicating completion of said data transfer to said client device (7) by way of said internal network (5).

10. The data transfer method for use in a storage system according to claim 2, wherein, in a case where two or more cache devices (4) are provided, said controller (2), in said transfer instruction issuance step (S2), generates a message required for said negotiation to be carried out between said client device (7) and said cache devices (4A, 4B) and transmits said message to said cache devices (4A, 4B) along with said data transfer instruction;
said cache devices (4A, 4B), in said direct transfer step (S3), transfer data to said client device (7) through use of said message generated by said controller (2);
any one of said cache devices (4A, 4B) transmits a message indicating completion of said data transfer to said client device (7) by way of said internal network (5); and
said client device (7) completes said data transfer upon receipt to said reply message from said respective cache devices (4A, 4B).

11. The data transfer method for use in a storage system according to claim 2, wherein, in a case where two or more cache devices (4) are provided, said controller (2), in said transfer instruction issuance step (S2), generates a message required for said negotiation to be carried out between said client device (7) and said cache devices (4A, 4B), transmits said message to said cache devices (4) along with said data transfer instruction, and transmits data copy destination cache device information to said cache devices(4A);
said cache devices (4A), in said direct transfer step (S3), transfer data to said client device (7) through use of said message received from said controller (2); and
one of said cache devices (4A) copies said received data to another cache device (4B) specified by said data copy destination cache device information received from said controller (2).

12. The data transfer method for use in a storage system according to any one of claims 9 through 11, wherein said controller (2) instructs any one of said cache devices (4A, 4B) caching the same data to transfer said data to said storage device (3); and
said cache device (4A) having received said instruction transfers said data to said storage device (3) by way of said internal network (5) and deletes said data which have been stored redundantly along with the other cache device (4B), thereby releasing a memory area thereof.

13. A storage system comprising:
a plurality of storage devices (3) for storing data;
a controller (2) controlling access to said storage devices (3); and
an internal network (5) interconnecting said storage devices (3) and said controller (2) so as to enable communications therebetween, wherein
said controller (2) comprises
virtual storage management means (21-5) managing memory areas of a plurality of said storage devices (3) as a virtual storage area of specific size by means of collectively managing said memory areas of a plurality of said storage devices (3) through use of a virtual storage address; and
transfer instruction issuing means (21-1) which issues a data transfer instruction to one of said storage devices (3) having said memory area specified by said virtual storage management means (21-5) on the basis of a certain virtual storage address upon receipt, by way of said internal network (5), of a request for access to said virtual storage area using said virtual storage address from a client device (7) accessibly connected to said internal network (5); and wherein
said storage device (3) has direct transfer means (34) which carries out a direct negotiation required for data transfer with said client device (7) in accordance with said data transfer instruction from said controller (2), thereby directly transferring data to said client device (7).

14. The storage system according to claim 13, further comprising a cache device (4) capable of caching said data stored in said storage device (3), wherein
said controller (2) further comprises cache area management means (21-4) for collectively managing a memory area of said cache device (4) through use of said virtual storage address; and
said transfer instruction issuing means is configured to issue said data transfer instruction to one of said storage device (3) and said cache device (4) having a memory area which can be specified by one of said virtual storage management means (21-5) and said cache area management means (21-4) on the basis of said virtual storage address.

15. The storage system according to claim 14, wherein the cache device (4) has direct transfer means (43) which carries out a direct negotiation required for data transfer with said client device (7) in accordance with said data transfer instruction from said controller (2), thereby directly transferring data to said client device (7).

16. The storage system according to claim 13, wherein said virtual storage management means (21-5) has mirroring means which effects mirroring by means of managing a virtual storage address assigned to a specific area of said virtual storage area and real addresses assigned to memory areas of a plurality of said storage devices in an associated manner.

17. The storage system according to claim 13, wherein said virtual storage management means (21-5) has striping means which effects striping by means of managing said virtual storage address and real addresses assigned to memory areas of a plurality of said storage devices (3) in an associated manner such that consecutive split areas obtained when said virtual storage area is divided into areas of given size are allocated to said memory areas of a plurality of said storage devices (3).

18. The storage system according to claim 13, 15, or 16, wherein said virtual storage management means (21-5) further includes virtual storage address change means for changing association of said virtual storage addresses of said virtual storage area with real addresses of increased or decreased memory areas of said storage devices (3) in accordance with an increase or decrease in the number of said storage devices (3) corresponding to said internal network.

19. The storage system according to claim 14, wherein said cache area management means (21-4) of said controller (2) comprises cache data instruction issuing means issuing, to said cache device (4) or said storage device (3), a data transfer instruction to be used for directly transferring data between said cache device (4) and said storage device (3).

## Patentansprüche

1. Speichersystem, enthaltend:
eine Speichervorrichtung (3), die Daten speichert;
eine Cache-Vorrichtung (4), die geeignet ist, die Daten, die in der Speichervorrichtung (3) gespeichert sind, in den Cache-Speicher aufzunehmen;
eine Steuerung (2), die einen Zugriff auf wenigstens die Speichervorrichtung (3) und die Cache-Vorrichtung (4) steuert; und
ein internes Netzwerk (5), das die Speichervorrichtung (3), die Cache-Vorrichtung (4) und die Steuerung verbindet, um Kommunikationen dazwischen zu ermöglichen, wobei
die Steuerung (2) Transferbefehlausgabeeinrichtungen (21-1) enthält, die einen Datentransferbefehl zu der Cache-Vorrichtung (4) oder der Speichervorrichtung (3) auf den Empfang einer Zugriffsanforderung hin ausgibt, die mittels des internen Netzwerkes (5) von einer Client-Vorrichtung (7) übertragen wurde, die mit dem internen Netzwerk (5) in einer zugreifbaren Weise verbunden ist; und
wenigstens die Speichervorrichtung (3) oder die Cache-Vorrichtung (4), die den Datentransferbefehl erhält, Direkttransfereinrichtungen (34 oder 43) zum Ausführen eines Direkttransfers von Daten zu der Client-Vorrichtung (7) mittels direktem Ausführen einer Übertragung empfängt, die zum Datentransfer mit der Client-Vorrichtung (7) gemäß dem Datentransferbefehl von der Steuerung (2) erforderlich ist.

2. Datentransferverfahren zur Verwendung in einem Speichersystem, das eine Speichervorrichtung (3), die Daten speichert, eine Cache-Vorrichtung (4), die geeignet ist, um die Daten, die in der Speichervorrichtung (3) gespeichert sind, in den Cache-Speicher aufzunehmen, eine Steuerung (2), die einen Zugriff auf wenigstens die Speichervorrichtung (3) und die Cache-Vorrichtung (4) steuert, und ein internes Netzwerk (5) hat, das die Speichervorrichtung (3), die Cache-Vorrichtung (4) und die Steuerung (2) verbindet, um Kommunikationen dazwischen zu ermöglichen, welches Verfahren enthält:
einen Zugriffsanforderungsausgabeschritt (S1) einer mit dem internen Netzwerk (5) in einer zugreifbaren Weise verbundenen Client-Vorrichtung (7), die eine Zugriffsanforderung zu der Steuerung (2) mittels des internen Netzwerkes (5) ausgibt;
einen Transferbefehlausgabeschritt (S2) der Steuerung (2), der einen Datentransferbefehl zu entweder der Cache-Vorrichtung (4) oder der Speichervorrichtung (3) auf den Empfang der Zugriffsanforderung hin ausgibt; und
einen Direkttransferschritt (S3) von der Cache-Vorrichtung (4) oder der Speichervorrichtung (3), der eine direkte Übertragung ausführt, die zum Transfer der Daten bezüglich der Client-Vorrichtung (7) erforderlich ist, wodurch Daten direkt zu der Client-Vorrichtung (7) übertragen werden.

3. Datentransferverfahren zur Verwendung in einem Speichersystem nach Anspruch 2, wobei die Steuerung (2) bei dem Transferbefehlausgabeschritt (S2) eine Mitteilung für die Übertragung erzeugt, die zwischen der Client-Vorrichtung (7) und der Cache-Vorrichtung (4) ausgeführt werden soll, und die Mitteilung zu der Cache-Vorrichtung (4) zusammen mit dem Datentransferbefehl überträgt; und
die Cache-Vorrichtung (4) bei dem Direkttransferschritt (S3) die Daten zu der Client-Vorrichtung (7) durch Verwendung der Mitteilung überträgt, die von der Steuerung (2) erzeugt wurde.

4. Datentransferverfahren zur Verwendung in einem Speichersystem nach Anspruch 2, wobei die Steuerung (2) bei dem Transferbefehlausgabeschritt (S2) eine Mitteilung für die Übertragung erzeugt, die zwischen der Client-Vorrichtung (7) und der Speichervorrichtung (3) ausgeführt werden soll, und die Mitteilung zu der Speichervorrichtung (3) zusammen mit dem Datentransferbefehl überträgt; und
die Speichervorrichtung (3) bei dem Direkttransferschritt (S3) Daten zu der Client-Vorrichtung (7) unter Verwendung der Mitteilung überträgt, die von der Steuerung (2) erzeugt wurde.

5. Datentransferverfahren zur Verwendung in einem Speichersystem nach Anspruch 2, wobei die Steuerung (2) bei dem Transferbefehlausgabeschritt (S2) eine Mitteilung für die Übertragung erzeugt, die zwischen der Client-Vorrichtung (7) und der Cache-Vorrichtung (4) ausgeführt werden soll, und die Mitteilung zu der Cache-Vorrichtung (4) zusammen mit dem Datentransferbefehl überträgt; und
die Cache-Vorrichtung (4) bei dem Direkttransferschritt (S3) die Mitteilung auf der Basis der Mitteilungsinformation erzeugt, die von der Steuerung (2) übertragen wurde, und Daten zu der Client-Vorrichtung (7) durch Verwendung der Mitteilung überträgt.

6. Datentransferverfahren zur Verwendung in einem Speichersystem nach Anspruch 2, wobei die Steuerung (2) bei dem Transferbefehlausgabeschritt (S2) eine Mitteilung, die zum Einrichten der Übertragung zwischen der Client-Vorrichtung (7) und der Speichervorrichtung (3) erforderlich ist, zu der Cache-Vorrichtung (4) zusammen mit dem Datentransferbefehl überträgt; und
die Speichervorrichtung (3) bei dem Direkttransferschritt (S3) die Mitteilung auf der Basis der Mitteilungsinformation erzeugt, die von der Steuerung (2) übertragen wurde, und Daten zu der Client-Vorrichtung (7) durch Verwendung der Mitteilung überträgt.

7. Datentransferverfahren zur Verwendung in einem Speichersystem nach Anspruch 3 oder 5, wobei die Cache-Vorrichtung eine Bestätigungsmitteilung an die Steuerung (2) mittels des internen Netzwerkes (5) ausgibt, wenn der Datentransfer, der zu dem Direkttransferschritt (S3) gehört, abgeschlossen wurde; und
die Steuerung (2) eine Antwortmitteilung ausgibt, die den Abschluss des Datentransfer zu der Client-Vorrichtung (7) mittels des internen Netzwerkes (5) auf den Empfang der Bestätigungsmitteilung von der Cache-Vorrichtung (4) hin angibt.

8. Datentransferverfahren zur Verwendung in einem Speichersystem nach Anspruch 4 oder 6, wobei die Speichervorrichtung (3) eine Bestätigungsmitteilung an die Steuerung (2) mittels des internen Netzwerkes (5) ausgibt, wenn der Datentransfer abgeschlossen wurde, der zu dem Direkttransferschritt (S3) gehört; und
die Steuerung (2) eine Antwortmitteilung ausgibt, die den Abschluss des Datentransfer zu der Client-Vorrichtung (7) mittels des internen Netzwerkes (5) auf den Empfang der Bestätigungsmitteilung von der Speichervorrichtung (3) hin angibt.

9. Datentransferverfahren zur Verwendung in einem Speichersystem nach Anspruch 2, wobei in einem Fall, in welchem zwei Cache-Vorrichtungen (4) vorgesehen sind, die Steuerung (2) in dem Transferbefehlausgabeschritt (S2) eine Mitteilung erzeugt, die für die Übertragung erforderlich ist, die zwischen der Client-Vorrichtung (7) und den Cache-Vorrichtungen (4A, 4B) ausgeführt werden soll, und die Mitteilung zu den Cache-Vorrichtungen (4A, 4B) zusammen mit dem Datentransferbefehl überträgt;
die Cache-Vorrichtungen (4A, 4B) in dem Direkttransferschritt (S3) Daten zu der Client-Vorrichtung (7) durch Verwendung der Mitteilung übertragen, die von der Steuerung (2) erzeugt wurde; und
jegliche der Cache-Vorrichtung (4A, 4B) eine Mitteilung, die den Abschluss des Datentransfers zu der Client-Vorrichtung (7) angibt, mittels des internen Netzwerkes (5) überträgt.

10. Datentransferverfahren zur Verwendung in einem Speichersystem nach Anspruch 2, wobei in einem Fall, in welchem zwei oder mehr Cache-Vorrichtungen (4) vorgesehen sind, die Steuerung (2) in dem Transferbefehlausgabeschritt (S2) eine Mitteilung erzeugt, die für die Übertragung erforderlich ist, die zwischen der Client-Vorrichtung (7) und den Cache-Vorrichtungen (4A, 4B) ausgeführt werden soll, und die Mitteilung zu den Cache-Vorrichtungen (4A, 4B) zusammen mit dem Datentransferbefehl überträgt;
die Cache-Vorrichtungen (4A, 4B) in dem Direkttransferschritt (S3) Daten zu der Client-Vorrichtung (7) unter Verwendung der Mitteilung übertragen, die von der Steuerung (2) erzeugt wurde;
jede der Cache-Vorrichtungen (4A, 4B) eine Mitteilung, die den Abschluss des Datentransfers zu der Client-Vorrichtung (7) angibt, mittels des internen Netzwerkes (5) überträgt; und
die Client-Vorrichtung (7) den Datentransfer auf den Erhalt der Antwortmitteilung von den jeweiligen Cache-Vorrichtungen (4A, 4B) hin abschließt.

11. Datentransferverfahren zur Verwendung in einem Speichersystem nach Anspruch 2, wobei in einem Fall, in welchem zwei oder mehr Cache-Vorrichtungen (4) vorgesehen sind, die Steuerung (2) in dem Transferbefehlausgabeschritt (S2) eine Mitteilung erzeugt, die für die Übertragung erforderlich ist, die zwischen der Client-Vorrichtung (7) und den Cache-Vorrichtungen (4A, 4B) ausgeführt werden soll, die Mitteilungen zu den Cache-Vorrichtungen (4) zusammen mit dem Datentransferbefehl überträgt und Datenkopiebestimmungs-Cache-Vorrichtungsinformationen zu den Cache-Vorrichtungen (4A) überträgt;
die Cache-Vorrichtungen (4A) in dem Direkttransferschritt (S3) Daten zu der Client-Vorrichtung (7) unter Verwendung der Mitteilung übertragen, die von der Steuerung (2) erhalten wurden; und
eine der Cache-Vorrichtungen (4A) die empfangenen Daten zu einer anderen Cache-Vorrichtung (4B) kopiert, die durch die Datenkopiebestimmungs-Cache-Vorrichtungsinformationen spezifiziert wurde, die von der Steuerung (2) erhalten wurden.

12. Datentransferverfahren zur Verwendung in einem Speichersystem nach einem der Ansprüche 9 bis 11, wobei die Steuerung (2) eine der Cache-Vorrichtungen (4A, 4B) instruiert, dieselben Daten in den Cashspeicher aufzunehmen, um die Daten zu der Speichervorrichtung (3) zu übertragen; und
die Cache-Vorrichtung (4A), die den Befehl erhalten hat, die Daten zu der Speichervorrichtung (3) mittels des internen Netzwerkes (5) überträgt und die Daten, die redundant zusammen mit der anderen Cache-Vorrichtung (4B) gespeichert wurden, löscht, wodurch ein Speicherbereich davon freigegeben wird.

13. Speichersystem, enthaltend:
eine Mehrzahl von Speichervorrichtungen (3) zum Speichern von Daten;
eine Steuerung (2), die einen Zugriff auf die Speichervorrichtungen (3) steuert; und
ein internes Netzwerk (5), das die Speichervorrichtungen (3) und die Steuerung (2) verbindet, um Kommunikationen dazwischen zu ermöglichen, wobei
die Steuerung (2) enthält
virtuelle Speicherverwaltungseinrichtungen (21-5), die Speicherbereiche einer Mehrzahl der Speichervorrichtungen (3) als einen virtuellen Speicherbereich einer spezifischen Größe mittels einer kollektiven Verwaltung der Speicherbereiche einer Mehrzahl der Speichervorrichtungen (3) unter Verwendung einer virtuellen Speicheradresse verwalten; und
Transferbefehlsausgabeeinrichtungen (21-1), die einen Datentransferbefehl zu einer der Speichervorrichtungen (3), die den Speicherbereich haben, der durch die virtuellen Speicherverwaltungseinrichtungen (21-5) spezifiziert ist, auf der Basis einer bestimmten virtuellen Speicheradresse auf den Empfang einer Anforderung zum Zugriff auf den virtuellen Speicherbereich mittels des internen Netzwerkes (5) unter Verwendung der virtuellen Speicheradresse von einer Client-Vorrichtung (7) ausgeben, die zugreifbar mit dem internen Netzwerk (5) verbunden ist; und wobei
die Speichervorrichtung (3) Direkttransfereinrichtungen (34) hat, die eine direkte Übertragung ausführen, die zur Datentransfer mit der Client-Vorrichtung (7) gemäß dem Datentransferbefehl von der Steuerung (2) erforderlich ist, wodurch Daten direkt zu der Client-Vorrichtung (7) übertragen werden.

14. Speichersystem nach Anspruch 13, ferner enthaltend eine Cache-Vorrichtung (4), die geeignet ist, die Daten, die in der Speichervorrichtung (3) gespeichert sind, in den Cache-Speicher aufzunehmen, wobei
die Steuerung (2) ferner Cash-Bereichverwaltungseinrichtungen (21-4) zum kollektiven Verwalten eines Speicherbereichs der Cache-Vorrichtung (4) durch Verwendung der virtuellen Speicheradresse enthalten; und
die Transferbefehlausgabeeinrichtungen konfiguriert sind, um den Datentransferbefehl zu der Speichervorrichtung (3) oder der Cache-Vorrichtung (4) auszugeben, die einen Speicherbereich hat, der durch die virtuellen Speicherverwaltungseinrichtungen (21-5) oder die Cash-Bereichverwaltungseinrichtungen (21-4) auf der Basis der virtuellen Speicheradresse spezifiziert werden kann.

15. Speichersystem nach Anspruch 14, wobei die Cache-Vorrichtung (4) Direkttransfereinrichtungen (43) hat, die eine direkte Übertragung ausführen, die zum Datentransfer mit der Client-Vorrichtung (7) gemäß dem Datentransferbefehl von der Steuerung (2) erforderlich ist, wodurch Daten direkt zu der Client-Vorrichtung (7) übertragen werden.

16. Speichersystem nach Anspruch 13, wobei die virtuellen Speicherverwaltungseinrichtungen (21-5) Spiegelungseinrichtungen haben, die ein Spiegeln mittels einer Verwaltung einer virtuellen Speicheradresse, die einem spezifischen Bereich des virtuellen Speicherbereichs zugewiesen ist, und realen Adressen bewirken, die Speicherbereichen einer Mehrzahl der Speichervorrichtungen in einer verbundenen Weise zugewiesen sind.

17. Speichersystem nach Anspruch 13, wobei die virtuellen Speicherverwaltungseinrichtungen (21-5) Streifungseinrichtungen haben, die eine Streifenbildung mittels eines Verwaltens der virtuellen Speicheradresse und der realen Adressen bewirken, die Speicherbereichen einer Mehrzahl der Speichervorrichtungen (3) in einer verbundenen Weise zugewiesen sind, so dass aufeinander folgende aufgeteilte Bereiche, die erhalten werden, wenn der virtuelle Speicherbereich in Bereiche einer gegebenen Größe unterteilt werden, denselben Speicherbereichen einer Mehrzahl der Speichervorrichtungen (3) zugeteilt werden.

18. Speichersystem nach Anspruch 13, 15 oder 16, wobei die virtuellen Speicherverwaltungseinrichtungen (21-5) ferner virtuellen Speicheradressenänderungseinrichtungen zum Ändern einer Zuordnung der virtuellen Speicheradressen des virtuellen Speicherbereiches zu realen Adressen von vergrößerten oder verkleinerten Speicherbereichen der Speichervorrichtungen (3) gemäß einer Zunahme oder Abnahme bei der Anzahl der Speichervorrichtungen (3) entsprechend dem internen Netzwerk enthalten.

19. Speichersystem nach Anspruch 14, wobei die Cache-Bereichverwaltungseinrichtungen (21-4) der Steuerung (2) Cash-Datenbefehlsausgabeeinrichtungen enthalten, die an die Cache-Vorrichtung (4) oder die Speichervorrichtung (3) einen Datentransferbefehl ausgeben, der zum direkten Übertragen von Daten zwischen der Cache-Vorrichtung (4) und der Speichervorrichtung (3) verwendet werden soll.

## Revendications

1. Système de stockage comportant :
un dispositif de stockage (3) stockant des données ;
un dispositif de mise en cache (4) pouvant mettre en cache lesdites données mémorisées dans ledit dispositif de stockage (3) ;
un contrôleur (2) contrôlant l'accès au moins audit dispositif de stockage (3) et audit dispositif de mise en cache (4) ; et
un réseau interne (5) interconnectant ledit dispositif de stockage (3), ledit dispositif de mise en cache (4), et ledit contrôleur (2) de manière à permettre des communications entre eux, dans lequel
ledit contrôleur (2) comprend un moyen d'émission d'instruction de transfert (21-1) qui émet une instruction de transfert de données à l'un dudit dispositif de mise en cache (4) et dudit dispositif de stockage (3) lors de la réception d'une requête d'accès transmise, par l'intermédiaire dudit réseau interne (5), à partir d'un dispositif client (7) relié audit réseau interne (5) de manière accessible ; et
au moins l'un dudit dispositif de stockage (3) et du dispositif de mise en cache (4) qui reçoit ladite instruction de transfert de données comprend un moyen de transfert direct (34 ou 43) pour effectuer un transfert direct de données audit dispositif client (7) en effectuant directement une négociation requise pour le transfert de données audit dispositif client (7) conformément à ladite instruction de transfert de données provenant dudit contrôleur (2).

2. Procédé de transfert de données utilisé dans un système de stockage possédant un dispositif de stockage (3) mémorisant des données, un dispositif de mise en cache (4) pouvant mettre en cache lesdites données mémorisées dans ledit dispositif de stockage (3), un contrôleur (2) contrôlant l'accès au moins audit dispositif de stockage (3) et audit dispositif de mise en cache (4), et un réseau interne (5) interconnectant ledit dispositif de stockage (3), ledit dispositif de mise en cache (4), et ledit contrôleur (2) de manière à permettre des communications entre eux, le procédé comportant :
une étape d'émission de requête d'accès (S1) d'un dispositif client (7) relié audit réseau interne (5) de manière accessible, qui émet une requête d'accès audit contrôleur (2) au moyen dudit réseau interne (5);
une étape d'émission d'instruction de transfert (S2) dudit contrôleur (2) qui émet une instruction de transfert de données soit audit dispositif de mise en cache (4) soit audit dispositif de stockage (3) lors de la réception de ladite requête d'accès ; et
une étape de transfert direct (S3) de l'un dudit dispositif de mise en cache (4) et dudit dispositif de stockage (3) effectuant une négociation directe requise pour un transfert de données par rapport audit dispositif client (7), transférant ainsi directement les données audit dispositif client (7).

3. Procédé de transfert de données utilisé dans un système de stockage selon la revendication 2, dans lequel ledit contrôleur (2), lors de ladite étape d'émission d'instruction de transfert (S2), génère un message pour effectuer ladite négociation entre ledit dispositif client (7) et ledit dispositif de mise en cache (4) et transmet ledit message audit dispositif de mise en cache (4) selon ladite instruction de transfert de données ; et
ledit dispositif de mise en cache (4), lors de ladite étape de transfert direct (S3), transfert les données audit dispositif client (7) en utilisant ledit message généré par ledit contrôleur (2).

4. Procédé de transfert de données utilisé dans un système de stockage selon la revendication 2, dans lequel le ledit contrôleur (2), lors de ladite étape d'émission d'instruction de transfert (S2), génère un message pour effectuer ladite négociation entre ledit dispositif client (7) et ledit dispositif de stockage (3) et transmet ledit message audit dispositif de stockage (3) selon ladite instruction de transfert de données ; et
ledit dispositif de stockage (3), lors de ladite étape de transfert direct (S3), transfert les données audit dispositif client (7) en utilisant ledit message généré par ledit contrôleur (2).

5. Procédé de transfert de données utilisé dans un système de stockage selon la revendication 2, dans lequel ledit contrôleur (2), au cours de l'étape d'émission d'instruction de transfert (S2) génère un message pour effectuer ladite négociation entre ledit dispositif client (7) et ledit dispositif de mise en cache (4) et transmet ledit message audit dispositif de mise en cache (4) selon ladite instruction de transfert de données ; et
ledit dispositif de mise en cache (4), lors de ladite étape de transfert direct (S3), génère ledit message en fonction de ladite information de message transmise depuis ledit contrôleur (2) et transfère les données audit dispositif client (7) en utilisant ledit message.

6. Procédé de transfert de données utilisé dans un système de stockage selon la revendication 2, dans lequel le ledit contrôleur (2), au cours de ladite étape d'émission d'instruction de transfert (S2), transmet un message requis pour établir ladite négociation entre ledit dispositif client (7) et ledit dispositif de stockage (3) audit dispositif de mise en cache (4) selon ladite instruction de transfert de données ; et
ledit dispositif de stockage (3), au cours de ladite étape de transfert direct (S3), génère ledit message en fonction de ladite information de message transmise depuis ledit contrôleur (2) et transfère les données audit dispositif client (7) en utilisant ledit message.

7. Procédé de transfert de données utilisé dans un système de stockage selon la revendication 3 ou 5, dans lequel ledit dispositif de mise en cache (4) émet un message d'accusé de réception audit contrôleur (2) par l'intermédiaire dudit réseau interne (5) lorsque ledit transfert de données concernant ladite étape de transfert direct (S3) a été achevée ; et
ledit contrôleur (2) émet un message de réponse indiquant l'achèvement du transfert de données audit dispositif client (7) par l'intermédiaire dudit réseau interne (5) lors de la réception dudit message d'accusé de réception provenant dudit dispositif de mise en cache (4).

8. Procédé de transfert de données utilisé dans un système de stockage selon la revendication 4 ou 6, dans lequel ledit dispositif de stockage (3) émet un message d'accusé de réception audit contrôleur (2) par l'intermédiaire dudit réseau interne (5) lorsque ledit transfert de données concernant ladite étape de transfert direct (S3) a été achevée ; et
ledit contrôleur (2) émet un message de réponse indiquant l'achèvement du transfert de données audit dispositif client (7) par l'intermédiaire dudit réseau interne (5) lors de la réception dudit message d'accusé de réception provenant dudit dispositif de stockage (3).

9. Procédé de transfert de données utilisé dans un système de stockage selon la revendication 2, dans lequel, au cas où deux dispositifs de mise en cache ou plus (4) sont prévus, ledit contrôleur (2), lors de ladite étape d'émission d'instruction de transfert (S2), génère un message requis pour effectuer ladite négociation entre ledit dispositif client (7) et lesdits dispositifs de mise en cache (4A, 4B) et transmet ledit message auxdits dispositifs de mise en cache (4A, 4B) selon ladite instruction de transfert de données ;
lesdits dispositifs de mise en cache (4A, 4B), au cours de ladite étape de transfert direct (S3), transfèrent les données audit dispositif client (7) en utilisant ledit message généré par ledit contrôleur (2) ; et
l'un quelconque desdits dispositifs de mise en cache (4A, 4B) transmet un message indiquant l'achèvement dudit transfert de données audit dispositif client (7) par l'intermédiaire dudit réseau interne (5).

10. Procédé de transfert de données utilisé dans un système de stockage selon la revendication 2, dans lequel, au cas où deux dispositifs de mise en cache ou plus (4) sont prévus, ledit contrôleur (2), au cours de ladite étape d'émission d'instruction de transfert (S2), génère un message requis pour effectuer ladite négociation entre ledit dispositif client (7) et lesdits dispositifs de mise en cache (4A, 4B) et transmet ledit message auxdits dispositifs de mise en cache (4A, 4B) selon ladite instruction de transfert de données ;
lesdits dispositifs de mise en cache (4A, 4B), au cours de ladite étape de transfert direct (S3), transfèrent les données audit dispositif client (7) en utilisant ledit message généré par ledit contrôleur (2);
l'un quelconque desdits dispositifs de mise en cache (4A, 4B) transmet un message indiquant l'achèvement dudit transfert de données audit dispositif client (7) par l'intermédiaire dudit réseau interne (5) ; et
ledit dispositif client (7) achève ledit transfert de données lors de la réception dudit message de réponse provenant desdits dispositifs de mise en cache respectifs (4A, 4B).

11. Procédé de transfert de données utilisé dans un système de stockage selon la revendication 2, dans lequel, au cas où deux dispositifs de mise en cache ou plus (4) sont prévus, ledit contrôleur (2), lors de ladite étape d'émission d'instruction de transfert (S2), génère un message requis pour effectuer ladite négociation entre ledit dispositif client (7) et lesdits dispositifs de mise en cache (4A, 4B), transmet ledit message auxdits dispositifs de mise en cache (4) avec ladite information de transfert de données, et transmet l'information de dispositif de mise en cache de destination de copie de données auxdits dispositifs de mise en cache (4A) ;
lesdits dispositifs de mise en cache (4A), au cours de ladite étape de transfert direct (S3), transfèrent les données audit dispositif client (7) en utilisant ledit message reçu depuis ledit contrôleur (2) ; et
l'un desdits dispositifs de mise en cache (4A) copie lesdites données reçues dans un autre dispositif de mise en cache (4B) spécifié par ladite information de dispositif de mise en cache de destination de copie de données reçue depuis ledit contrôleur (2).

12. Procédé de transfert de données utilisé dans un système de stockage selon l'une quelconque des revendications 9 à 11, dans lequel ledit contrôleur (2) ordonne à l'un quelconque desdits dispositifs de mise en cache (4A, 4B) mettant en cache ces données pour transférer lesdites données audit dispositif de stockage (3) ; et
ledit dispositif de mise en cache (4A) ayant reçu ladite instruction transfère lesdites données audit dispositif de stockage (3) par l'intermédiaire dudit réseau interne (5) et efface lesdites données qui ont été mémorisées de façon redondante avec l'autre dispositif de mise en cache (4B), libérant ainsi une zone de mémoire de celui-ci.

13. Système de stockage comportant :
une pluralité de dispositifs de stockage (3) pour mémoriser des données ;
un contrôleur (2) contrôlant l'accès auxdits dispositifs de stockage (3) ; et
un réseau interne (5) interconnectant lesdits dispositifs de stockage (3) et ledit contrôleur (2) de manière à permettre des communications entre eux, dans lequel
ledit contrôleur (2) comprend
un moyen de gestion de stockage virtuel (21-5) gérant les zones de mémoire d'une pluralité desdits dispositifs de stockage (3) en tant que zone de stockage virtuel de taille particulière en gérant collectivement lesdites zones de mémoire d'une pluralité desdits dispositifs de stockage (3) en utilisant une adresse de stockage virtuel ; et
un moyen d'émission d'instruction de transfert (21-1) qui émet une instruction de transfert de données à l'un desdits dispositifs de stockage (3) présentant ladite zone de mémoire spécifiée par ledit moyen de gestion de stockage virtuel (21-5) en fonction d'une certaine adresse de stockage virtuel lors de la réception, par l'intermédiaire dudit réseau interne (5), d'une requête pour accéder à ladite zone de stockage virtuel en utilisant ladite adresse de stockage virtuel provenant d'un dispositif client (7) relié de façon accessible audit réseau interne (5) ; et dans lequel
ledit dispositif de stockage (3) possède un moyen de transfert direct (34) qui effectue une négociation directe requise pour un transfert de données avec ledit dispositif client (7) conformément à ladite instruction de transfert de données provenant dudit contrôleur (2), transférant ainsi directement les données audit dispositif client (7).

14. Système de stockage selon la revendication 13, comportant en outre un dispositif de mise en cache (4) pouvant mettre en cache lesdites données mémorisées dans ledit dispositif de stockage (3), dans lequel
ledit contrôleur (2) comprend en outre un moyen de gestion de zone de mise en cache (21-4) pour gérer collectivement une zone de mémoire dudit dispositif de mise en cache (4) en utilisant ladite adresse de stockage virtuel; et
ledit moyen d'émission d'instruction de transfert est configuré pour émettre ladite instruction de transfert de données à l'un dudit dispositif de stockage (3) et dudit dispositif de mise en cache (4) possédant une zone de mémoire qui peut être spécifiée par l'un dudit moyen de gestion de stockage virtuel (21-5) et dudit moyens de gestion de zone de mise en cache (21-4) en fonction de ladite adresse de stockage virtuel.

15. Système de stockage selon la revendication 14, dans lequel le dispositif de mise en cache (4) possède un moyen de transfert direct (43) qui effectue une négociation directe requise pour un transfert de données avec ledit dispositif client (7) conformément à ladite instruction de transfert de données provenant dudit contrôleur (2), transférant ainsi directement les données audit dispositif client (7).

16. Système de stockage selon la revendication 13, dans lequel ledit moyen de gestion de stockage virtuel (21-5) possède un miroir qui effectue un duplication en gérant une adresse de stockage virtuel assignée à une zone spécifique de ladite zone de stockage virtuel et des adresses réelles assignées aux zones de mémoire d'une pluralité desdits dispositifs de stockage de manière associée.

17. Système de stockage selon la revendication 13, dans lequel ledit moyen de gestion de stockage virtuel (21-5) possède un moyen d'entrelacement qui effectue un entrelacement en gérant ladite adresse de stockage virtuel et des adresses réelles assignées aux zones de mémoire d'une pluralité desdits dispositifs de stockage (3) de manière associée de sorte que des zones divisées consécutives obtenues lorsque ladite zone de stockage virtuel est divisée en zones de taille donnée sont allouées auxdites zones de mémoire d'une pluralité desdits dispositifs de stockage (3).

18. Système de stockage selon la revendication 13, 15, ou 16, dans lequel ledit moyen de gestion de stockage virtuel (21-5) comprend en outre un moyen de changement d'adresse de stockage virtuel pour changer l'association desdites adresses de stockage virtuel de ladite zone de stockage virtuel avec les adresses réelles des zones de mémoire augmentées ou réduites desdits dispositifs de stockage (3) conformément à une augmentation ou à une diminution du nombre des dispositifs de stockage (3) correspondant audit réseau interne.

19. Système de stockage selon la revendication 14, dans lequel ledit moyen de gestion de zone de mise en cache (21-4) dudit contrôleur (2) comprend un moyen d'émission d'instruction de données de cache émettant, audit dispositif de mise en cache (4) ou audit dispositif de stockage (3), une instruction de transfert de données à utiliser pour transmettre directement des données entre ledit dispositif de mise en cache (4) et ledit dispositif de stockage (3).
